# EUROPEAN PATENT SPECIFICATION

(11) **EP 4 336 755 B1**
(45) Date of publication and mention of the grant of the patent: **27.05.2026**
(21) Application number: 21940191.6
(22) Date of filing: 20.05.2021
(51) Int. Cl.: H04L 1/00, H04L 69/22, H04L 69/324

(54) **DATA TRANSMISSION METHOD AND RELATED DEVICE**
DATENÜBERTRAGUNGSVERFAHREN UND ZUGEHÖRIGE VORRICHTUNG
PROCÉDÉ DE TRANSMISSION DE DONNÉES ET DISPOSITIF ASSOCIÉ

(43) Date of publication of application: 13.03.2024
(73) Proprietor: Huawei Technologies Co., Ltd., Shenzhen, Guangdong 518129 (CN)
(72) Inventor: LIU, Yongjun, Shenzhen, Guangdong 518129 (CN)
(74) Representative: Gill Jennings & Every LLP
(86) International application number: PCT/CN2021/094988
(87) International publication number: WO 2022/241737

(56) References cited:
- EP-A1- 3 036 900
- CN-A- 109 361 490
- CN-A- 109 428 798
- CN-A- 111 371 736
- US-A1- 2003 067 912

## Description

### TECHNICAL FIELD

This application relates to the field of communication technologies, and in particular, to a data transmission method and a related device.

### BACKGROUND

In a communication network, data is transmitted between data transmission devices according to a network protocol. A network protocol usually includes an application layer, a transport layer, a network layer, a data link layer, and a physical layer from top to bottom. In a sending process, header information of a specific protocol needs to be added each time data passes through a protocol layer. In contrast, in a receiving process, header information of a specific protocol needs to be removed each time the data passes through a protocol layer. Because there are a large quantity of protocol layers, a high delay exists in data transmission between data transmission devices. In some application scenarios (for example, a service that needs to transmit data in real time), a requirement for low-delay data transmission cannot be met.
EP3036900A1 discloses an apparatus for transmitting broadcast signals, an apparatus for receiving broadcast signals, a method for transmitting broadcast signals, and a method for receiving broadcast signals.

### SUMMARY

Embodiments of this application provide a data transmission method and a related device, to implement low-delay data transmission in a communication network.

A first aspect of this application discloses a data transmission method, applied to a first data transmission device in accordance with appended claim 1.

According to an existing network transmission technology, data transmission devices can be interconnected and transmit data to each other only after being configured with Internet Protocol (Internet Protocol, IP) addresses. An IP address is an address used by a network layer in a currently used five-layer network protocol. The five-layer network protocol includes an application layer, a transport layer, a network layer, a data link layer, and a physical layer from top to bottom. In an IP address-based data transmission method, data transmission is relatively slow, and a requirement for low-delay data transmission cannot be met. According to the data transmission method provided in this embodiment of this application, an improved MAC frame (for example, the first MAC frame) is constructed, and data is transmitted based on a MAC protocol by using the improved MAC frame. The MAC protocol is a protocol used at the data link layer. A network protocol used in this embodiment of this application includes a data link layer and a physical layer from top to bottom, and processing at an application layer, a transport layer, and a network layer is omitted. According to the data transmission method provided in this embodiment of this application, data transmission devices do not need to be configured with an IP address, and can be interconnected and transmit data to each other when no IP address is configured. This reduces an interconnection time between the devices, implements low-delay data transmission, and improves transmission efficiency. In this embodiment of this application, a protocol type field and a data header of an existing MAC frame are user-defined, to obtain an improved MAC frame, and fast data transmission is implemented by using the improved MAC frame.

The frame type field is a first frame type, and the first frame type indicates that the first MAC frame is used to search for a MAC address of another data transmission device; or the frame type field is a second frame type, and the second frame type indicates that the first MAC frame is used to advertise a MAC address of the first data transmission device; or the frame type field is a third frame type, the third frame type indicates that the first MAC frame is used to transmit application data, and the data content includes the application data.

The first MAC frame used in this embodiment of this application includes a data part, the data part includes a data header, and the data header includes a frame type field. In this embodiment of this application, three frame types are defined by using the frame type field, so that three different functions can be implemented by using the first MAC frame: searching for the MAC address of the another data transmission device, advertising the MAC address of the first data transmission device, and transmitting the application data.

In some optional implementations, if the frame type field is the first frame type, the sending the first MAC frame to a second data transmission device includes: sending the first MAC frame to the second data transmission device in a MAC broadcast manner.

In some optional implementations, after the sending the first MAC frame to the second data transmission device in a MAC broadcast manner, the method further includes: receiving a second MAC frame sent by the second data transmission device, where the second MAC frame is sent to the first data transmission device in a MAC unicast manner after the second data transmission device receives the first MAC frame, a structure of the second MAC frame is the same as that of the first MAC frame, a frame type field of the second MAC frame is the second frame type, data content of the second MAC frame includes device information of the second data transmission device, and a frame header of the second MAC frame includes a MAC address of the second data transmission device; and parsing out the MAC address of the second data transmission device from the second MAC frame.

The first data transmission device first sends the first MAC to the second data transmission device in a MAC broadcast manner, the second data transmission device obtains the MAC address of the first data transmission device from the first MAC frame, and then the second data transmission device sends the second MAC frame in a unicast manner. The first data transmission device obtains the MAC address of the second data transmission device from the second MAC frame, to establish a data connection between the first data transmission device and the second data transmission device, so that the first data transmission device subsequently sends application data to the second data transmission device.

In some optional implementations, before constructing a first MAC frame, the method further includes: receiving a third MAC frame sent by the second data transmission device in a MAC broadcast manner, where a structure of the third MAC frame is the same as that of the first MAC frame, a frame type field of the third MAC frame is the first frame type, data content of the third MAC frame includes device information of the second data transmission device, and a frame header of the third MAC frame includes a MAC address of the second data transmission device; and parsing out the MAC address of the second data transmission device from the third MAC frame. The constructing a first MAC frame includes: constructing the first MAC frame based on the MAC address of the second data transmission device, where a frame type field of the first MAC frame is the second frame type, and a frame header of the first MAC frame includes the MAC address of the first data transmission device. The sending the first MAC frame to a second data transmission device includes: sending the first MAC frame to the second data transmission device in a MAC unicast manner.

The second data transmission device first sends a third MAC to the first data transmission device in a MAC broadcast manner, the first data transmission device obtains a MAC address of the second data transmission device from the third MAC, the first data transmission device sends the first MAC to the second data transmission device in a MAC unicast manner, and the second data transmission device obtains the MAC address of the first data transmission device from the first MAC, to establish a data connection between the first data transmission device and the second data transmission device, so that the first data transmission device subsequently sends application data to the second data transmission device.

In some optional implementations, the first data transmission device includes an indoor unit, the second data transmission device includes a screen-equipped panel, and the indoor unit and the screen-equipped panel form a visual access control system.

In some optional implementations, the device information of the second data transmission device includes screen resolution, a screen size, and decoder information.

In some optional implementations, the first data transmission device includes an application corresponding to the second data transmission device, and before the constructing a first MAC frame, the method further includes: running the application on the first data transmission device;
generating a graphical interface of the application based on the screen resolution and the screen size; and encoding the graphical interface based on the decoder information to obtain the application data.

In some optional implementations, the data header further includes a packet number field and a segment number field, and the constructing the first MAC frame for the application data includes:
segmenting the application data to obtain segmented data; performing forward error correction encoding on the segmented data to obtain a forward error correction code; and encapsulating the forward error correction code and the segmented data to obtain the first MAC frame.

In this embodiment of this application, a maximum length of data content of an improved MAC frame (for example, the first MAC frame) may be less than a size of the application data (for example, less than a size of each frame of image in the application data), and segmenting the application data can implement fast transmission of relatively large application data. Performing forward error correction encoding on the segmented data may implement reliable transmission on an unreliable channel or a channel with strong noise interference, thereby improving reliability of data transmission.

A second aspect of this application discloses a data transmission method, applied to a second data transmission device in accordance with appended claim 8.

In some optional implementations, the frame type field is a third frame type, the third frame type indicates that the first MAC frame is used to transmit application data, and the data content includes the application data; and the method further includes: parsing out the application data from the first MAC frame of the third frame type.

In some optional implementations, the data header further includes a packet number field and a segment number field, and the method further includes: performing forward error correction decoding on the application data to obtain data after the error correction decoding; and combining the data after the error correction decoding into a data packet based on the packet number field and the segment number field.

In some optional implementations, the frame type field is a first frame type, the first frame type indicates that the first MAC frame is used to search for a MAC address of another data transmission device, the first MAC frame is sent to the second data transmission device in a MAC broadcast manner, and a frame header part of the first MAC frame includes a MAC address of the first data transmission device. After the receiving a first MAC frame, the method further includes: parsing out the MAC address of the first data transmission device from the first MAC frame of the first frame type; constructing a second MAC frame, where a structure of the second MAC frame is the same as that of the first MAC frame, a frame type field of the second MAC frame is a second frame type, data content of the second MAC frame includes device information of the second data transmission device, the second frame type indicates that the second MAC frame is used to advertise a MAC address of the second data transmission device, and a frame header of the second MAC frame includes the MAC address of the second data transmission device; and sending the second MAC frame to the first data transmission device in a MAC unicast manner.

In some optional implementations, the frame type field is a second frame type, the second frame type indicates that the first MAC frame is used to advertise a MAC address of the second data transmission device, the first MAC frame is sent to a second data transmission device in a MAC unicast manner, and a frame header of the first MAC frame includes a MAC address of the first data transmission device. Before receiving a first MAC frame, the method further includes: constructing a third MAC frame, where a structure of the third MAC frame is the same as that of the first MAC frame, a frame type field of the third MAC frame is a first frame type, data content of the third MAC frame includes device information of the second data transmission device, the first frame type indicates that the third MAC frame is used to search for a MAC address of another data transmission device, and a frame header of the third MAC frame includes a MAC address of the second data transmission device; and sending the third MAC frame to the first data transmission device in a MAC broadcast manner. After the receiving a first MAC frame, the method further includes: parsing out the MAC address of the first data transmission device from the first MAC frame of the second frame type.

In some optional implementations, the first data transmission device includes an indoor unit, the second data transmission device includes a screen-equipped panel, and the indoor unit and the screen-equipped panel form a visual access control system.

A third aspect of this application discloses a data transmission apparatus in accordance with appended claim 13.

A further aspect of this application discloses a computer-readable storage medium in accordance with appended claim 14.

It may be understood that the data transmission apparatuses according to the third aspect and the fourth aspect, the computer-readable storage medium according to the fifth aspect, the data transmission device according to the sixth aspect, the computer program product according to the seventh aspect, and the terminal according to the eighth aspect all correspond to the methods according to the first aspect and the second aspect. Therefore, for beneficial effects that can be achieved by the data transmission apparatuses, the computer-readable storage medium, the data transmission device, the computer program product, and the terminal, refer to the beneficial effects in the corresponding methods provided above. Details are not described herein again.

### BRIEF DESCRIPTION OF DRAWINGS

FIG. 1 is a schematic diagram of an application scenario of a data transmission method according to an embodiment of this application;
FIG. 2 is a schematic diagram of a structure of an improved MAC frame used in an embodiment of this application;
FIG. 3 shows a frame type defined by a frame type field of an improved MAC frame;
FIG. 4 is a schematic diagram of a structure of an improved MAC frame used in another embodiment of this application;
FIG. 5 is a flowchart of a data transmission method according to an embodiment of this application;
FIG. 6 is a schematic diagram in which an indoor unit segments application data, performs forward error correction encoding on segmented data, and encapsulates a forward error correction code and segmented data;
FIG. 7 is a schematic diagram in which a screen-equipped panel parses out an error correction code and segmented data from an improved MAC frame of a third frame type, performs forward error correction decoding on the segmented data, and combines the data obtained after the error correction decoding into one frame of image;
FIG. 8 is a flowchart of a data transmission method according to another embodiment of this application;
FIG. 9 is a diagram of a structure of a data transmission apparatus according to an embodiment of this application;
FIG. 10 is a diagram of a structure of a data transmission apparatus according to another embodiment of this application; and
FIG. 11 is a schematic diagram of a structure of a data transmission device according to an embodiment of this application.

### DESCRIPTION OF EMBODIMENTS

For ease of understanding, descriptions of some concepts related to embodiments of this application are provided as an example for reference.

It should be noted that, in this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. In this specification, claims, and accompanying drawings of this application, terms "first", "second", "third", "fourth", and the like (if existent) are intended to distinguish between similar objects but do not necessarily indicate a specific order or sequence.

To better understand a data transmission method and a related device disclosed in embodiments of this application, the following first describes an application scenario of the data transmission method according to this application.

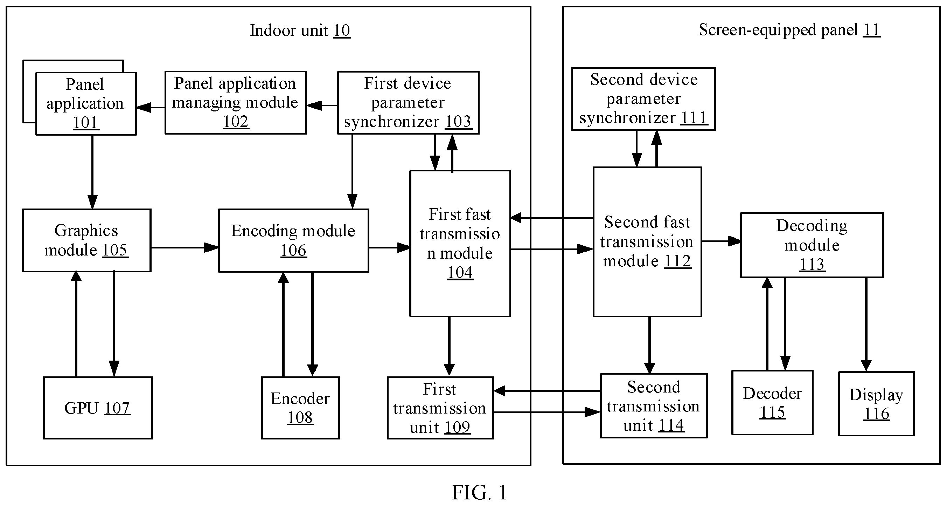

FIG. 1 is a schematic diagram of an application scenario of a data transmission method according to an embodiment of this application. The data transmission method according to this embodiment is applied to a visual access control system. The visual access control system includes an indoor unit 10 and at least one screen-equipped panel 11. The indoor unit 10 is generally located at an entrance to a house, for example, located at a hallway. The screen-equipped panel 11 is generally located in a room, for example, in a bedroom. The indoor unit 10 may include a device with a relatively strong computing capability, for example, a home computer, a high-end television, a high-end router, a home computing center, or a home edge computing center. The screen-equipped panel 11 may include a device with a relatively weak computing capability, for example, a refrigerator with a light emitting diode (light-emitting diode, LED) screen, or a rice cooker with an LED screen.

In an embodiment of this application, the indoor unit 10 may use an Android system, and the screen-equipped panel 11 may use a HarmonyOS embedded system. In another embodiment of this application, the indoor unit 10 and the screen-equipped panel 11 may alternatively use another operating system. For example, the indoor unit 10 may use an iOS system, and the screen-equipped panel 11 may use a Windows system.

FIG. 1 shows only interconnection between the indoor unit 10 and one screen-equipped panel 11. It should be understood that the indoor unit 10 may be interconnected with a plurality of screen-equipped panels 11.

In an embodiment of this application, the indoor unit 10 and the screen-equipped panel 11 may be interconnected by using a G.hn standard power cable. G.hn is a set of protocols and specifications related to power cables, telephone lines, and coaxial cables. This standard integrates existing twisted pairs, coaxial cables, and power cables to implement centralized transmission, to significantly reduce installation and operation costs.

In another embodiment of this application, the indoor unit 10 and the screen-equipped panel 11 may be interconnected by using another power cable.

The indoor unit 10 and the screen-equipped panel 11 may include a plurality of software and hardware modules. Refer to FIG. 1. The software modules of the indoor unit 10 may include a panel application 101, a panel application managing module 102, a first device parameter synchronizer 103, a first fast transmission module 104, a graphics module 105, and an encoding module 106. The hardware modules of the indoor unit 10 may include a graphics processing unit (Graphics Processing Unit, GPU) 107, an encoder 108, and a first transmission unit 109. The software modules of the screen-equipped panel 11 may include a second device parameter synchronizer 111, a second fast transmission module 112, and a decoding module 113. The hardware modules of the screen-equipped panel 11 may include a second transmission unit 114, a decoder 115, and a display 116. It should be understood that the graphics module 105 and the GPU 107 jointly complete graphics data-related processing by using software and hardware, and the encoding module 106 and the encoder 108 jointly complete encoding-related processing by using software and hardware.

Each screen-equipped panel 11 corresponds to one panel application 101. In the embodiment shown in FIG. 1, to reduce use costs of a user and facilitate service upgrade of a visual access control system, the panel application 101 corresponding to the screen-equipped panel 11 is included in the indoor unit 10. When service upgrade needs to be performed on the visual access control system, only the indoor unit 10 needs to be upgraded, and each screen-equipped panel 11 does not need to be upgraded. Service software (that is, the panel application 101) of the screen-equipped panel 11 is migrated to the indoor unit 10, and running of the service software of the screen-equipped panel 11 is supported by sharing a computing capability of the indoor unit 10, so that a requirement for the computing capability of the screen-equipped panel 11 can be reduced, and hardware costs of the screen-equipped panel 11 can be reduced. Panel applications 101 corresponding to different screen-equipped panels 11 may be the same or may be different. The indoor unit 10 runs the panel application 101, and may generate a graphical interface of the screen-equipped panel 11.

The panel application managing module 102 is configured to manage the panel application 101. For example, the indoor unit 10 is in communication connection to five screen-equipped panels 11, the indoor unit 10 includes five panel applications 101, each panel application 101 corresponds to one screen-equipped panel 11, and the panel application managing module 102 may manage the five panel applications 101.

The first device parameter synchronizer 103 is configured to provide a device parameter of the indoor unit 10 to the first fast transmission module 104, to synchronize the device parameter of the indoor unit 10 to the screen-equipped panel 11. The device information of the indoor unit 10 may include screen resolution, a screen size, and decoder information of the indoor unit 10. Similarly, the second device parameter synchronizer 111 is configured to provide a device parameter of the screen-equipped panel 11 to the second fast transmission module 112, to synchronize the device parameter of the screen-equipped panel 11 to the indoor unit 10. The device information of the screen-equipped panel 11 may include screen resolution, a screen size, and decoder information of the screen-equipped panel 11. The first device parameter synchronizer 103 is further configured to: after receiving the device parameter of the screen-equipped panel 11, provide the screen resolution and the screen size of the screen-equipped panel 11 to the panel application 101 by using the panel application managing module 102, so that the panel application 101 generates a corresponding graphical interface based on the screen resolution and the screen size of the screen-equipped panel 11, and provide decoder information of the screen-equipped panel 11 to the encoding module 106, so that the encoding module 106 encodes the graphical interface based on the decoder information of the screen-equipped panel 11.

In the embodiment shown in FIG. 1, the first device parameter synchronizer 103 synchronizes the device parameter of the indoor unit 10 to the screen-equipped panel 11. In another embodiment of this application, the first device parameter synchronizer 103 may not synchronize the device parameter of the indoor unit 10 to the screen-equipped panel 11.

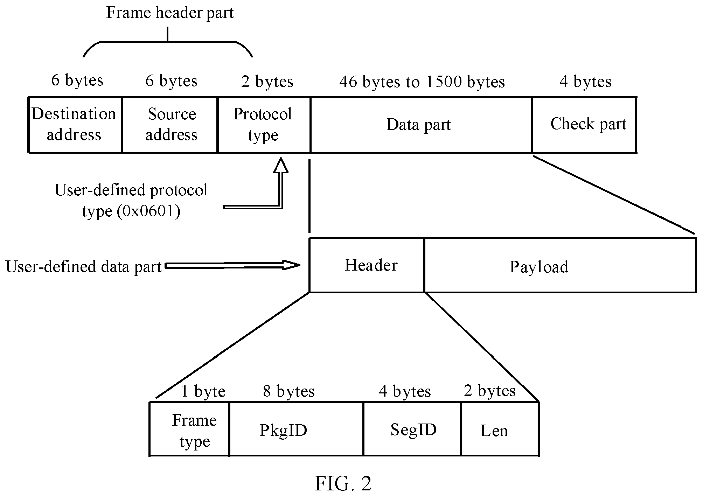

The first fast transmission module 104 and the second fast transmission module 112 are configured to perform data transmission between the indoor unit 10 and the screen-equipped panel 11 based on a media access control (Media Access Control, MAC) protocol. The first fast transmission module 104 and the second fast transmission module 112 construct an improved MAC frame, and implement fast data transmission by using the improved MAC frame. According to an existing network transmission technology, data transmission devices (for example, an indoor unit 10 and a screen-equipped panel 11) can be interconnected and transmit data to each other only after being configured with Internet Protocol (Internet Protocol, IP) addresses. An IP address is an address used by a network layer in a currently used five-layer network protocol. The five-layer network protocol includes an application layer, a transport layer, a network layer, a data link layer, and a physical layer from top to bottom. In a sending process, header information of a specific protocol needs to be added each time data passes through a protocol layer. In a receiving process, header information of a specific protocol needs to be removed each time the data passes through a protocol layer. In the IP address-based data transmission method, data transmission is relatively slow, and a requirement for low-delay data transmission cannot be met. According to the data transmission method provided in this embodiment of this application, data is transmitted based on the MAC protocol, and the MAC protocol is a protocol used at the data link layer. A network protocol used in this embodiment of this application includes a data link layer and a physical layer from top to bottom, and processing at an application layer, a transport layer, and a network layer is omitted. According to the data transmission method provided in this embodiment of this application, data transmission devices do not need to be configured with an IP address, and can be interconnected and transmit data to each other when no IP address is configured. This reduces an interconnection time between the devices, implements low-delay data transmission, and improves transmission efficiency. A structure of the improved MAC frame is described in detail in FIG. 2. The first fast transmission module 104 transmits data by using the first transmission unit 109. The second fast transmission module 112 performs data transmission by using the second transmission unit 114. The first fast transmission module 104 may perform wired transmission or wireless transmission by using the first transmission unit 109. The second fast transmission module 112 may also perform wired transmission or wireless transmission by using the second transmission unit 114.

The graphics module 105 is configured to provide a virtual screen technology. The indoor unit 10 runs the panel application 101, and generates a graphical interface of a screen-equipped panel 11 by using the GPU 107. The virtual screen technology means that a graphical interface generated by an application is not displayed on an actual physical display, but is displayed on a virtual screen represented by a segment of memory. By using the virtual screen technology provided by the graphics module 105, the graphical interface of the screen-equipped panel 11 generated by the panel application 101 is not displayed on the indoor unit 10, but is displayed on a virtual screen represented by a segment of memory in the indoor unit 10. The first fast transmission module 104 may obtain graphics data of the screen-equipped panel 11 from the memory of the indoor unit 10, and send the graphical interface of the screen-equipped panel 11 to the screen-equipped panel 11.

The encoding module 106 is configured to encode, by using the encoder 108, data sent by the indoor unit 10. For example, a device parameter of the indoor unit 10 is encoded, or a graphical interface of a screen-equipped panel 11 is encoded.

The decoding module 113 is configured to decode, by using the decoder 115, data received by the screen-equipped panel 11. For example, a device parameter of the indoor unit 10 is decoded, or a graphical interface of a screen-equipped panel 11 is decoded.

The display 116 is configured to display a decoded graphical interface of the screen-equipped panel 11.

The data transmission method provided in this embodiment of this application may be applied to another scenario. The data transmission method provided in this embodiment of this application may be used for fast data transmission between a first data transmission device and a second data transmission device. The first data transmission device and the second data transmission device each may be a smartphone, a smartwatch, a smart speaker, a tablet computer, a desktop computer, a laptop computer, an in-vehicle computer, or the like.

FIG. 2 is a schematic diagram of a structure of an improved MAC frame used in an embodiment of this application.

In a data transmission method provided in this embodiment of this application, a first data transmission device (for example, an indoor unit 10 in FIG. 1) and a second data transmission device (for example, a screen-equipped panel in FIG. 1) construct an improved MAC frame, and perform data transmission between the first data transmission device and the second data transmission device by using the improved MAC frame.

The improved MAC frame is obtained by extending an existing MAC frame, and the improved MAC frame meets a requirement of a MAC protocol.

The improved MAC frame includes a frame header part, a data part, and a check part. The frame header part includes a destination address field, a source address field, and a protocol type field. For example, both the destination address field and the source address field are 6 bytes. The protocol type field is 2 bytes.

The destination address field includes destination MAC address information, and the source address field includes source MAC address information.

A protocol type field of an existing MAC frame indicates a protocol used by an upper layer (that is, a network layer), so that a receive end delivers a data part of a received MAC frame to a corresponding upper-layer protocol. For example, if the protocol type field is 0x0800, it indicates that the network layer uses an Internet Protocol (Internet Protocol, IP); or if the protocol type field is 0x8137, it indicates that the network layer uses an Internet Packet Switched (Internetwork Packet Exchange, IPX) protocol.

A data part of the existing MAC frame includes only one field, and a length of the field ranges from 46 bytes to 1500 bytes, and includes data transmitted from the network layer.

The improved MAC frame extends the protocol type field and the data part (that is, the protocol type and the data part are user-defined) of the existing MAC frame, and a value of the protocol type field of the improved MAC frame is different from that of the existing MAC frame. The protocol type field of the improved MAC frame is a first indication value, and the first indication value indicates that the data part of the improved MAC frame includes a data header and data content. In an embodiment of this application, the first indication value may be 0x0601. It should be understood that, in another embodiment of this application, the first indication value may be another value (provided that the value is different from a value of a protocol type field of an existing MAC frame).

The data part of the improved MAC frame includes a data header (represented as "Header" in the figure) and data content (represented as "Payload" in the figure). The data header includes a frame type field (represented as "Frame Type" in the figure) and a data length field (represented as "Len" in the figure). The frame type field indicates a type of the improved MAC frame.

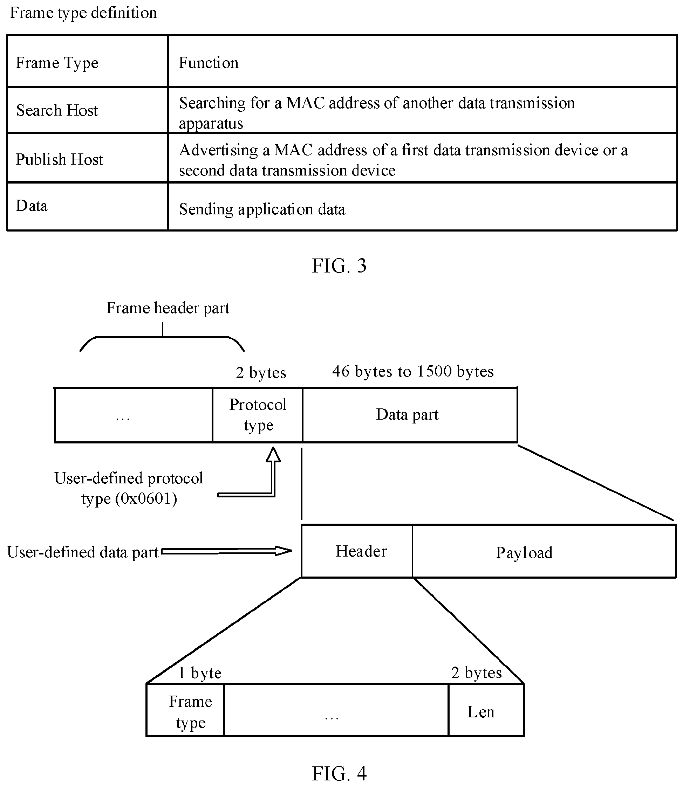

FIG. 3 shows a frame type defined by a frame type field (namely "Frame Type") of an improved MAC frame.

Refer to FIG. 3. The improved MAC frame defines three frame types by using the frame type field. When the frame type field of the improved MAC frame is "Search Host", the improved MAC frame is of a first frame type, and the first frame type indicates that the improved MAC frame is used to search for a MAC address of another data transmission device. When the frame type field of the improved MAC frame is "Publish Host", the improved MAC frame is of a second frame type, and the second frame type indicates that the improved MAC frame is used to advertise a MAC address of the first data transmission device or the second data transmission device. When the frame type field of the improved MAC frame is "Data", the improved MAC frame is of a third frame type, and the third frame type indicates that the improved MAC frame is used to send application data (for example, video data). It should be understood that the frame type field of the improved MAC frame may define a frame type different from that in FIG. 3, and the frame type field of the improved MAC frame may use an identifier different from that in FIG. 3 to represent a different frame type.

The data length field indicates a length of data content (that is, the Payload field).

In an embodiment of this application, the data header further includes a packet number field (represented as "PkgID" in the figure) and a segment number field (represented as "SegID" in the figure). The packet number field indicates a data packet to which the data content belongs, that is, identify a sequence number of the data packet. The segment number field indicates a location of the data content in the data packet, that is, identify a sequence number of the segment. One data packet may correspond to one file, for example, one frame of image or one audio. When a size of the file is greater than a maximum length (for example, 1485 bytes) of the data content of the improved MAC frame, the file needs to be divided into a plurality of segments, and each segment is encapsulated into one improved MAC frame for transmission. The packet number field and the segment number field are fields that are set for segment transmission. Based on the PkgId and the SegId, the receiver can reassemble a complete data packet (that is, a file) based on obtained segmented data.

In an embodiment of this application, a length of the data header of the improved MAC frame is 15 bytes, where the frame type field is 1 byte, the packet number field is 8 bytes (that is, 64 bits), the segment number field is 4 bytes (that is, 32 bits), and the data length field is 2 bytes (that is, 16 bits). The length of the data content ranges from 31 bytes to 1485 bytes (including 31 bytes and 1485 bytes).

In an embodiment of this application, the first two bytes of the segment number of the improved MAC frame are used to indicate a total quantity of segments, and the last two bytes may be used to indicate a segment sequence number.

A definition of the check part of the improved MAC frame is the same as that of the existing MAC frame, and is used to transmit a check code. For example, a length of the check part is 4 bytes.

FIG. 4 is a schematic diagram of a structure of an improved MAC frame used in another embodiment of this application.

Refer to FIG. 4. The improved MAC frame may include a frame header part and a data part, and the frame header part includes a protocol type field. For example, the protocol type field of the improved MAC frame may be a first indication value (for example, 0x0601), and the first indication value indicates that the data part of the improved MAC frame includes a data header (represented as "Header" in the figure) and data content (represented as "Payload" in the figure). The data header of the improved MAC frame includes a frame type field (represented as "Frame Type" in the figure) and a data length field (represented as "Len" in the figure), the frame type field indicates a type of the improved MAC frame, and the data length field indicates a length of the data content. For example, the protocol type field is 2 bytes, the data part ranges from 46 bytes to 1500 bytes, the frame type field is 1 byte, and the data length field is 2 bytes.

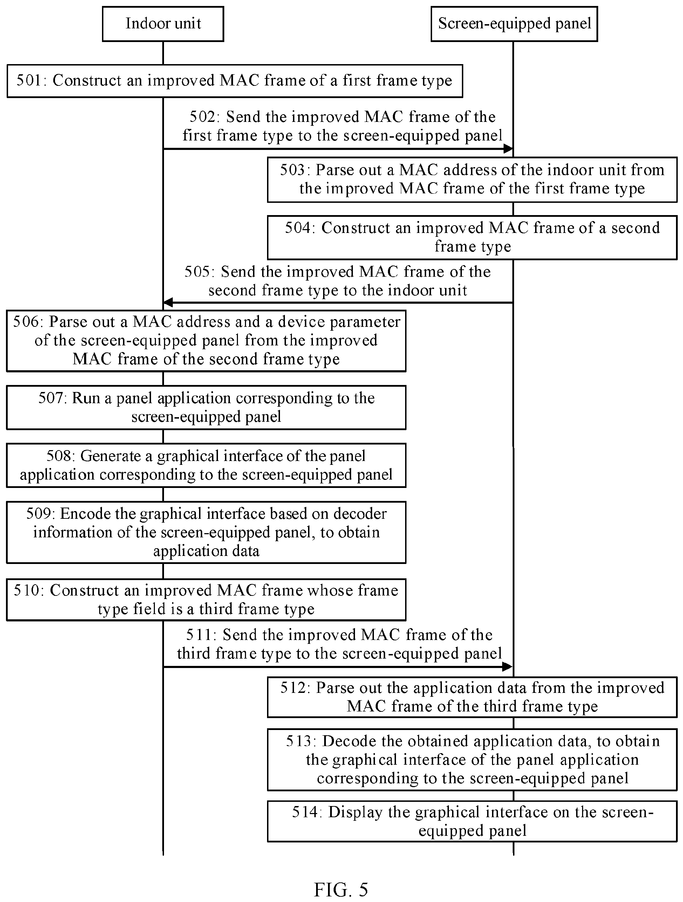

FIG. 5 is a flowchart of a data transmission method according to an embodiment of this application. The application scenario shown in FIG. 1 is used as an example in FIG. 5 for description.

501: An indoor unit constructs an improved MAC frame of a first frame type.

The indoor unit searches for a MAC address of a screen-equipped panel by using the improved MAC frame of the first frame type.

The indoor unit may construct the improved MAC frame of the first frame type when being powered on.

Refer to FIG. 2. The improved MAC frame of the first frame type constructed by the indoor unit includes a frame header part and a data part, and the frame header part includes a destination address field, a source address field, and a protocol type field. The protocol type field of the improved MAC frame of the first frame type constructed by the indoor unit is a first indication value, and the first indication value indicates that the data part of the improved MAC frame includes a data header and data content. The data header of the improved MAC frame of the first frame type constructed by the indoor unit includes a frame type field, a packet number field, a segment number field, and a data length field.

In an embodiment of this application, the destination address field of the improved MAC frame of the first frame type constructed by the indoor unit is empty, the source address field is a MAC address of the indoor unit, the protocol type field is "0x0601", the frame type field is "Search Host", and a packet number field, the segment number field, the data length field, and the data content are empty.

In another embodiment of this application, the data content of the improved MAC frame of the first frame type constructed by the indoor unit includes a device parameter of the indoor unit, and the data length field indicates a data length of the device parameter of the indoor unit. The device parameter of the indoor unit may include screen resolution, a screen size, and decoder information of the indoor unit.

Refer to FIG. 1. The indoor unit may fill the device parameter of the indoor unit into the data content of the improved MAC frame of the first frame type by using a first device parameter synchronizer 103.

502: The indoor unit sends the improved MAC frame of the first frame type to a screen-equipped panel in a MAC broadcast manner.

As shown in FIG. 1, the indoor unit may send the improved MAC frame of the first frame type to the screen-equipped panel by using a first fast transmission module 104 and a first transmission unit 109.

Broadcast means that a sender sends data on an entire network, and is a "one-to-all" communications mode in which all devices on the network can receive the data.

The indoor unit may keep the destination address field of the improved MAC frame of the first frame type empty, indicating that MAC broadcast is performed. Alternatively, the indoor unit may set the destination address field of the improved MAC frame of the first frame type to a preset broadcast address, indicating that MAC broadcast is performed.

503: After receiving the improved MAC frame of the first frame type, the screen-equipped panel parses out the MAC address of the indoor unit from the improved MAC frame of the first frame type.

The screen-equipped panel may parse out the source address field of the improved MAC frame of the first frame type, and obtain the MAC address of the indoor unit from the source address field of the improved MAC frame of the first frame type.

504: The screen-equipped panel constructs an improved MAC frame of a second frame type.

The screen-equipped panel advertises a MAC address of the screen-equipped panel to the indoor unit by using the improved MAC frame of the second frame type.

A structure of the improved MAC frame of the second frame type constructed by using the screen-equipped panel is the same as that of the improved MAC frame of the first frame type constructed by using the indoor unit. Refer to FIG. 2. An improved MAC frame of the second frame type constructed by a screen-equipped panel includes a frame header part and a data part, and the frame header part includes a destination address field, a source address field, and a protocol type field. The protocol type field of the improved MAC frame of the second frame type constructed by the screen-equipped panel is a first indication value, and the first indication value indicates that the data part of the improved MAC frame includes a data header and data content. The data header of the improved MAC frame of the second frame type constructed by the screen-equipped panel includes a frame type field, a packet number field, a segment number field, and a data length field.

In an embodiment of this application, the destination address field of the improved MAC frame of the second frame type constructed by the screen-equipped panel is the MAC address of the indoor unit, the source address field is the MAC address of the screen-equipped panel, the protocol type field of the improved MAC frame of the second frame type is "0x0601", the frame type field is "Publish Host", the packet number field and the segment number field are empty, the data content includes the device parameter of the screen-equipped panel, and the data length field is the data length of the device parameter of the screen-equipped panel.

Refer to FIG. 1. The screen-equipped panel may fill, by using a second device parameter synchronizer 111, the device parameter of the screen-equipped panel into the data content of the improved MAC frame of the second frame type constructed by the screen-equipped panel.

In an embodiment of this application, device parameters of a screen-equipped panel include screen resolution, a screen size, and decoder information of the screen-equipped panel.

505: The screen-equipped panel sends the improved MAC frame of the second frame type to the indoor unit in a MAC unicast manner.

Refer to FIG. 1, the screen-equipped panel may send the improved MAC frame of the second frame type to the indoor unit by using a second fast transmission module 112 and a second transmission unit 114.

Unicast means that a separate information sending path is established between a sender and each receiver, and the sender and each receiver communicate in one-to-one mode.

506: After receiving the improved MAC frame of the second frame type, the indoor unit parses out the MAC address and the device parameter of the screen-equipped panel from the improved MAC frame of the second frame type.

The indoor unit may parse out the source address field of the improved MAC frame of the second frame type, and obtain the MAC address of the screen-equipped panel from the source address field of the improved MAC frame of the second frame type. The indoor unit may parse out the data content of the improved MAC frame of the second frame type, and obtain the device parameter of the screen-equipped panel from the data content of the improved MAC frame of the second frame type.

507: The indoor unit runs a panel application corresponding to the screen-equipped panel.

Refer to FIG. 1. A panel application (a panel application 101) corresponding to the screen-equipped panel is included in the indoor unit.

For example, the screen-equipped panel is a refrigerator with an LED screen, and the indoor unit runs a panel application corresponding to the refrigerator.

508: The indoor unit generates, based on the screen resolution and the screen size of the screen-equipped panel, a graphical interface of the panel application corresponding to the screen-equipped panel.

Refer to FIG. 1. The indoor unit may generate, by using a graphics module 105 and a GPU 107, the graphical interface of the panel application corresponding to the screen-equipped panel.

The screen-equipped panel being a refrigerator with an LED screen is still used as an example. The indoor unit generates, based on screen resolution and a screen size of the refrigerator, the graphical interface of the panel application corresponding to the refrigerator.

509: The indoor unit encodes the generated graphical interface based on the decoder information of the screen-equipped panel, to obtain application data.

Refer to FIG. 1. The indoor unit may encode the generated graphical interface by using an encoding module 106 and an encoder 108.

The screen-equipped panel being a refrigerator with an LED screen is still used as an example. The indoor unit encodes the generated graphical interface based on decoder information of the refrigerator, to obtain the application data.

An encoding format supported by the screen-equipped panel can be determined based on the decoder information of the screen-equipped panel. For example, it is determined, based on the decoder information of the screen-equipped panel, that the screen-equipped panel supports an H.264 encoding format, and the indoor unit encodes the generated graphical interface to obtain a video stream in the H.264 format. For another example, it is determined, based on the decoder information of the screen-equipped panel, that the screen-equipped panel supports a Joint Photographic Experts Group (Joint Photographic Experts Group, JPEG) encoding format, and the indoor unit encodes the generated graphical interface to obtain a video stream in the H.264 format.

The application data obtained by the indoor unit by encoding the generated graphical interface based on the decoder information of the screen-equipped panel includes a plurality of frames of images.

510: The indoor unit constructs an improved MAC frame of a third frame type.

The indoor unit transmits the application data to the screen-equipped panel by using the improved MAC frame of the third frame type.

A structure of the improved MAC frame of the third frame type is the same as that of the improved MAC frame of the first frame type constructed by the indoor unit and that of the improved MAC frame of the second frame type constructed by the screen-equipped panel. Refer to FIG. 2, the improved MAC frame of the third frame type includes a frame header part and a data part, and the frame header part includes a destination address field, a source address field, and a protocol type field. The protocol type field of the improved MAC frame of the third frame type is a first indication value, and the first indication value indicates that the data part of the improved MAC frame of the third frame type includes a data header and data content. The data header of the improved MAC frame of the third frame type includes a frame type field, a packet number field, a segment number field, and a data length field. Data content of the improved MAC frame of the third frame type includes application data.

In an embodiment of this application, the destination address field of the improved MAC frame of the third frame type is the MAC address of the screen-equipped panel, the source address field of the improved MAC frame of the third frame type is the MAC address of the indoor unit, the protocol type field of the improved MAC frame of the third frame type is "0x0601", and the frame type field of the improved MAC frame of the third frame type is "Data", the data content of the improved MAC frame of the third frame type is the application data, and the data length field of the improved MAC frame of the third frame type is a data length of the application data.

In an embodiment of this application, that the indoor unit constructs an improved MAC frame of a third frame type includes: segmenting the application data to obtain segmented data; performing forward error correction encoding on the segmented data to obtain a forward error correction code; and encapsulating the forward error correction code and the segmented data to obtain the improved MAC frame of the third frame type. The packet number field and the segment number field of the improved MAC frame of the third frame type are a packet number and a segment number that are corresponding to the segmented data. In this embodiment, the data content of the improved MAC frame of the third frame type includes the forward error correction code and the segmented data.

A maximum length of the data content of the improved MAC frame may be less than a size of the application data (for example, less than a size of each frame of image in the application data). To implement fast transmission of the application data, the indoor unit transmits the application data in segments. For example, the length of the data content ranges from 31 bytes to 1485 bytes, and the maximum length is 1485 bytes. Each frame of image in the application data may be segmented in units of 1485 bytes.

Forward error correction encoding is a technology used to control an error during data transmission on an unreliable channel or a channel with strong noise. Forward error correction encoding has introduced a gain encoding technology such as cascaded channel encoding, and can automatically correct a transmission bit error. Forward error correction encoding is to perform redundancy encoding on data (for example, application data) by using the forward error correction code.

For more information about forward error correction encoding, refer to a related technology. Details are not described herein again.

The encapsulating the forward error correction code and the segmented data may be encapsulating the forward error correction code into an improved MAC frame, and encapsulating each piece of segmented data into an improved MAC frame, that is, filling the forward error correction code or the segmented data into a data content field of a corresponding improved MAC frame.

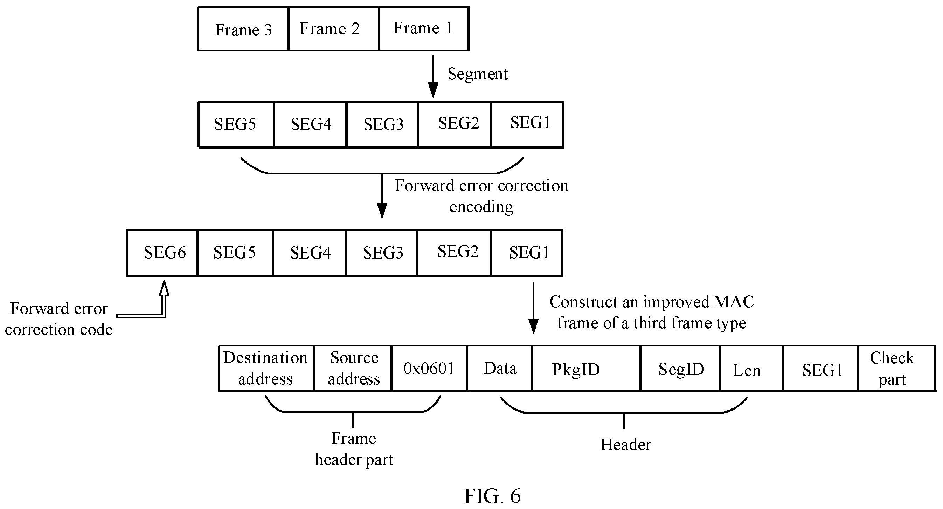

FIG. 6 is a schematic diagram in which an indoor unit segments application data, performs forward error correction encoding on segmented data, and encapsulates a forward error correction code and segmented data.

Refer to FIG. 6. The application data includes three frames of images: a frame 1, a frame 2, and a frame 3. The indoor unit segments the frame 1 to obtain five pieces of segmented data: an SEG 1, an SEG 2, an SEG 3, an SEG 4, and an SEG 5, performs forward error correction encoding on the SEG 1, SEG 2, SEG 3, SEG 4, and SEG 5 to obtain a forward error correction code SEG 6, and encapsulates the SEG 1 to obtain an improved MAC frame that is of the third frame type and that corresponds to the SEG 1, encapsulates the SEG 2 to obtain an improved MAC frame that is of the third frame type and that corresponds to the SEG 2, encapsulates the SEG 3 to obtain an improved MAC frame that is of the third frame type and that corresponds to the SEG 3, encapsulates the SEG 4 to obtain an improved MAC frame that is of the third frame type and that corresponds to the SEG 4, and encapsulates the SEG 5 to obtain an improved MAC frame that is of the third frame type and that corresponds to the SEG 5 is obtained, and encapsulates the SEG 6 to obtain an improved MAC frame that is of the third frame type and that corresponds to the SEG 6 (FIG. 6 shows only encapsulation of the SEG 1 to obtain the improved MAC frame that is of the third frame type and that corresponds to the SEG 1).

511: The indoor unit sends the improved MAC frame of the third frame type to the screen-equipped panel.

Refer to FIG. 1. The indoor unit may send the improved MAC frame of the third frame type to the screen-equipped panel by using a first fast transmission module 104 and a first transmission unit 109.

For example, in 510, the indoor unit segments the application data to obtain segmented data; performs forward error correction encoding on the segmented data to obtain a forward error correction code; and encapsulates the forward error correction code and the segmented data to obtain the improved MAC frame of the third frame type. The indoor unit sends, to the screen-equipped panel, the improved MAC frame of the third frame type that is obtained through segmentation, forward error correction encoding, and encapsulation.

512: After receiving the improved MAC frame of the third frame type, the screen-equipped panel parses out the application data from the improved MAC frame of the third frame type.

In an embodiment of this application, the packet number field and the segment number field of the improved MAC frame of the third frame type are empty: and the screen-equipped panel may determine a data length of the improved MAC frame based on the data length field of the improved MAC frame of the third frame type, and parse out the application data from the data content of the improved MAC frame of the third frame type based on the data length of the improved MAC frame. For example, the screen-equipped panel determines, based on the data length field of the improved MAC frame of the third frame type, that the data length of the improved MAC frame of the third frame type is 1200 bytes, obtains 1200-byte data from the data content of the improved MAC frame of the third frame type, and uses the obtained 1200-byte data as the application data.

In another embodiment of this application, the improved MAC frame of the third frame type received by the screen-equipped panel is obtained by performing segmentation, forward error correction encoding, and encapsulation on a frame of image as shown in FIG. 6, neither the packet number field nor the segment number field of the improved MAC frame of the third frame type is empty, and the data content of the improved MAC frame of the third frame type includes a forward error correction code or segmented data. Correspondingly, the screen-equipped panel parses out the forward error correction code and the segmented data from a plurality of improved MAC frames of the third frame types, performs forward error correction decoding on the segmented data based on the forward error correction code, to obtain data after error correction decoding, and combines, based on the packet number field and the segment number field of the improved MAC frame of the third frame type, the data after error correction decoding, to obtain a data packet (for example, a frame of image). The data after the error correction decoding includes error-free segmented data and the data after the error correction that are parsed out.

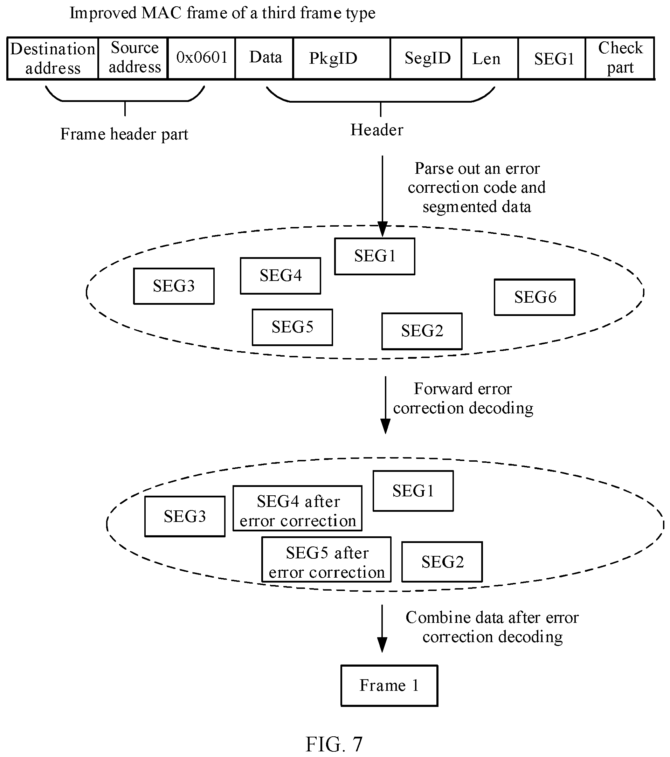

FIG. 7 is a schematic diagram in which a screen-equipped panel parses out an error correction code and segmented data from an improved MAC frame of a third frame type, performs forward error correction decoding on the segmented data based on an error correction code, and combines the data obtained after the error correction decoding into one frame of image.

Refer to FIG. 7. The screen-equipped panel parses out an SEG 1 from an improved MAC frame that is of a third frame type and that corresponds to the SEG 1, parses out an SEG 2 from an improved MAC frame that is of the third frame type and that corresponds to the SEG 2, parses out an SEG 3 from an improved MAC frame that is of the third frame type and that corresponds to the SEG 3, parses out an SEG 4 from an improved MAC frame that is of the third frame type and that corresponds to the SEG 4, parses out an SEG 5 from an improved MAC frame that is of the third frame type and that corresponds to the SEG 5, and parses out an SEG 6 from an improved MAC frame that is of the third frame type and that corresponds to the SEG 6 (the figure shows only parsing out of the SEG 1 from the improved MAC frame that is of the third frame type and that corresponds to the SEG 1). Based on the SEG 6, the screen-equipped panel determines that an error occurs in the SEG 4 and the SEG 5 obtained through parsing, and recovers the correct SEG 4 and the SEG 5 (that is, the SEG 4 and the SEG 5 obtained after error correction are obtained). The screen-equipped panel combines data obtained after error correction decoding (including error-free SEG 1, SEG 2, and SEG 3 that are parsed out, and the SEG 4 and the SEG 5 after error correction that are parsed out) into the frame 1.

513: The screen-equipped panel decodes the obtained application data, to obtain the graphical interface of the panel application corresponding to the screen-equipped panel.

Refer to FIG. 1. The screen-equipped panel may decode the application data by using a decoding module 113 and a decoder 115.

The screen-equipped panel being a refrigerator with an LED screen is still used as an example. The refrigerator decodes the parsed application data to obtain the graphical interface of the panel application corresponding to the refrigerator.

514: The screen-equipped panel displays, on the screen-equipped panel, the graphical interface of the panel application corresponding to the screen-equipped panel.

Refer to FIG. 1. The screen-equipped panel may display, on a display 116, the graphical interface of the panel application corresponding to the screen-equipped panel.

The screen-equipped panel being a refrigerator with an LED screen is still used as an example. The refrigerator displays the graphical interface of the corresponding panel application on the LED screen of the refrigerator.

According to the existing network transmission technology, the screen-equipped panel and the indoor unit can communicate with each other and send data to each other only after being configured with IP addresses. However, the IP address-based data transmission method cannot meet a requirement for a low delay. In the data transmission method provided in this embodiment of this application, data transmission is performed based on the MAC protocol, and no longer depends on a network layer protocol. Neither the screen-equipped panel nor the indoor unit needs to be configured with an IP address. The screen-equipped panel and the indoor unit can be interconnected and transmit data to each other when no IP address is configured. This reduces an interconnection time between the devices, implements low-delay data transmission, and improves transmission efficiency.

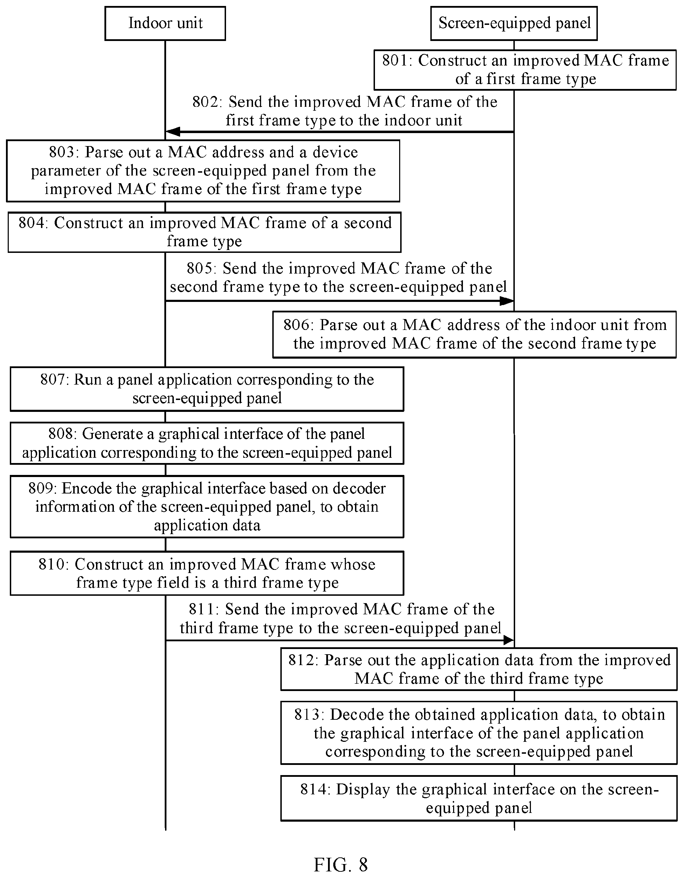

FIG. 8 is a flowchart of a data transmission method according to another embodiment of this application.

801: The screen-equipped panel constructs an improved MAC frame of a first frame type.

The screen-equipped panel may construct the improved MAC frame of the first frame type when being powered on.

In an embodiment of this application, a destination address field of the improved MAC frame of the first frame type constructed by the screen-equipped panel, a source address field is a MAC address of the screen-equipped panel, a protocol type field is "0x0601", a frame type field is "Search Host", a packet number field and a segment number field are empty, data content includes a device parameter of the screen-equipped panel, and a data length field indicates a data length of the device parameter of the screen-equipped panel.

802: The screen-equipped panel sends the improved MAC frame of the first frame type to an indoor unit in a MAC broadcast manner.

803: After receiving the improved MAC frame of the first frame type, the indoor unit parses out the MAC address and the device parameter of the screen-equipped panel from the improved MAC frame of the first frame type.

804: The indoor unit constructs an improved MAC frame of a second frame type.

In an embodiment of this application, a destination address field of the improved MAC frame of the second frame type constructed by the indoor unit is the MAC address of the screen-equipped panel, a source address field is a MAC address of the indoor unit, a protocol type field is "0x0601", a frame type field is "Public Host", and a packet number field, a segment number field, a data length field, and data content are empty.

In another embodiment of this application, the data content of the improved MAC frame of the second frame type constructed by the indoor unit includes a device parameter of the indoor unit, and the data length field indicates a data length of the device parameter of the indoor unit. The device parameter of the indoor unit may include screen resolution, a screen size, and decoder information of the indoor unit.

805: The indoor unit sends the improved MAC frame of the second frame type to the screen-equipped panel in a MAC unicast manner.

806: After receiving the improved MAC frame of the second frame type, the screen-equipped panel parses out the MAC address of the indoor unit from the improved MAC frame of the second frame type.

807: The indoor unit runs a panel application corresponding to the screen-equipped panel.

808: The indoor unit generates, based on the screen resolution and the screen size of the screen-equipped panel, a graphical interface of the panel application corresponding to the screen-equipped panel.

809: The indoor unit encodes the generated graphical interface based on the decoder information of the screen-equipped panel, to obtain application data.

810: The indoor unit constructs an improved MAC frame of a third frame type.

811: The indoor unit sends the improved MAC frame of the third frame type to the screen-equipped panel.

812: After receiving the improved MAC frame of the third frame type, the screen-equipped panel parses out the application data from the improved MAC frame of the third frame type.

813: The screen-equipped panel decodes the obtained application data, to obtain the graphical interface of the panel application corresponding to the screen-equipped panel.

814: The screen-equipped panel displays, on the screen-equipped panel, the graphical interface of the panel application corresponding to the screen-equipped panel.

For details about 807 to 814, refer to related descriptions of 507 to 514 in FIG. 5. Details are not described herein again.

Based on a same technical concept as that of the method embodiments, an embodiment of this application provides a data transmission apparatus.

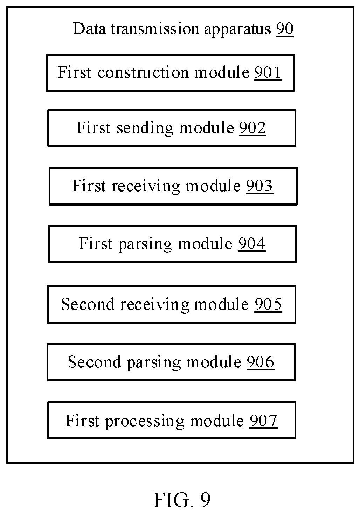

FIG. 9 is a diagram of a structure of a data transmission apparatus according to an embodiment of this application. The data transmission apparatus 90 shown in FIG. 9 is applied to a first data transmission device. The data transmission apparatus 90 includes a first construction module 901 and a first sending module 902. Optionally, the data transmission apparatus 90 may further include a first receiving module 903, a first parsing module 904, a second receiving module 905, a second parsing module 906, and a first processing module 907.

The first construction module 901 is configured to construct a first media access control MAC frame. The first MAC frame includes a frame header part and a data part, and the frame header part includes a protocol type field. The protocol type field of the first MAC frame is a first indication value, and the first indication value indicates that the data part of the first MAC frame includes a data header and data content. The data header includes a frame type field and a data length field, the frame type field indicates a type of the first MAC frame, and the data length field indicates a length of the data content.

The first sending module 902 is configured to send the first MAC frame to a second data transmission device.

In some optional implementations, the frame type field is a first frame type, and the first frame type indicates that the first MAC frame is used to search for a MAC address of another data transmission device; or the frame type field is a second frame type, and the second frame type indicates that the first MAC frame is used to advertise a MAC address of the first data transmission device; or the frame type field is a third frame type, the third frame type indicates that the first MAC frame is used to transmit application data, and the data content includes the application data.

In some optional implementations, if the frame type field is the first frame type, the first sending module 902 is configured to send the first MAC frame to the second data transmission device in a MAC broadcast manner.

The first receiving module 903 is configured to receive a second MAC frame sent by the second data transmission device. The second MAC frame is sent by the second data transmission device to the first data transmission device in a MAC unicast manner after the second data transmission device receives the first MAC frame. A structure of the second MAC frame is the same as that of the first MAC frame, a frame type field of the second MAC frame is the second frame type, and data content of the second MAC frame includes device information of the second data transmission device. A frame header of the second MAC frame includes a MAC address of the second data transmission device.

The first parsing module 904 is configured to parse out the MAC address of the second data transmission device from the second MAC frame.

The second receiving module 905 is configured to receive a third MAC frame sent by the second data transmission device in a MAC broadcast manner. A structure of the third MAC frame is the same as that of the first MAC frame. The frame type field of the third MAC frame is the first frame type, the data content of the third MAC frame includes the device information of the second data transmission device, and the frame header of the third MAC frame includes the MAC address of the second data transmission device.

The second parsing module 906 is configured to parse out the MAC address of the second data transmission device from the third MAC frame.

In some optional implementations, the first construction module 901 is configured to construct a first MAC frame based on a MAC address of the second data transmission device. A frame type field of the first MAC frame is the second frame type, and a frame header of the first MAC frame includes the MAC address of the first data transmission device. The first sending module 902 is configured to send the first MAC frame to the second data transmission device in a MAC unicast manner.

In some optional implementations, the first data transmission device includes an application corresponding to the second data transmission device, and the device information of the second data transmission device includes screen resolution, a screen size, and decoder information.

The first processing module 907 is configured to: run the application corresponding to the second data transmission device on the first data transmission device; generate a graphical interface of the application based on the screen resolution and the screen size; and encode the graphical interface based on the decoder information to obtain application data.

In some optional implementations, the data header further includes a packet number field and a segment number field. The first construction module 901 is configured to segment the application data to obtain segmented data; perform forward error correction encoding on the segmented data to obtain a forward error correction code; and encapsulate the forward error correction code and the segmented data to obtain a first MAC frame.

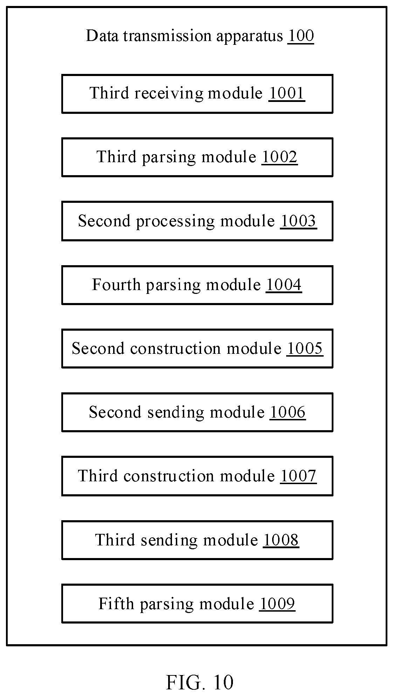

FIG. 10 is a diagram of a structure of a data transmission apparatus according to another embodiment of this application. The data transmission apparatus 100 shown in FIG. 10 is applied to a second data transmission device. The data transmission apparatus 100 includes a third receiving module 1001. Optionally, the data transmission apparatus 100 may further include a third parsing module 1002, a second processing module 1003, a fourth parsing module 1004, a second construction module 1005, a second sending module 1006, a third construction module 1007, a third sending module 1008, and a fifth parsing module 1009.

The third receiving module 1001 is configured to receive a first media access control MAC frame sent by a first data transmission device. The first MAC frame includes a frame header part and a data part, and the frame header part includes a protocol type field. The protocol type field of the first MAC frame is a first indication value, and the first indication value indicates that the data part of the first MAC frame includes a data header and data content. The data header includes a frame type field and a data length field, the frame type field indicates a type of the first MAC frame, and the data length field indicates a length of data content.

In some optional implementations, the frame type field is a third frame type, the third frame type indicates that the first MAC frame is used to transmit application data, and the data content includes the application data.

The third parsing module 1002 is configured to parse out the application data from the first MAC frame.

In some optional implementations, the data header further includes a packet number field and a segment number field.

The second processing module 1003 is configured to: perform forward error correction decoding on the application data, to obtain data after the error correction decoding; and combine the data after the error correction decoding into a data packet based on the packet number field and the segment number field.

In some optional implementations, the frame type field is a first frame type, the first frame type indicates that the first MAC frame is used to search for a MAC address of another data transmission device, the first MAC frame is sent to the second data transmission device in a MAC broadcast manner, and a frame header part of the first MAC frame includes a MAC address of the first data transmission device.

The fourth parsing module 1004 is configured to parse out the MAC address of the first data transmission device from the first MAC frame of the first frame type.

The second construction module 1005 is configured to construct a second MAC frame. A structure of the second MAC frame is the same as that of the first MAC frame. A frame type field of the second MAC frame is a second frame type, data content of the second MAC frame includes device information of the second data transmission device, the second frame type indicates that the second MAC frame is used to advertise a MAC address of the second data transmission device, and a frame header of the second MAC frame includes the MAC address of the second data transmission device.

The second sending module 1006 is configured to send the second MAC frame to the first data transmission device in a MAC unicast manner.

In some optional implementations, the frame type field is a second frame type, the second frame type indicates that the first MAC frame is used to advertise a MAC address of the second data transmission device, the first MAC frame is sent to a second data transmission device in a MAC unicast manner, and a frame header of the first MAC frame includes a MAC address of the first data transmission device.

The third construction module 1007 is configured to construct a third MAC frame before receiving the first MAC frame. A structure of the third MAC frame is the same as that of the first MAC frame. A frame type field of the third MAC frame is a first frame type, data content of the third MAC frame includes device information of the second data transmission device, the first frame type indicates that the third MAC frame is used to search for a MAC address of another data transmission device, and a frame header of the third MAC frame includes a MAC address of the second data transmission device.

The third sending module 1008 is configured to send the third MAC frame to the first data transmission device in a MAC broadcast manner.

The fifth parsing module 1009 is configured to parse out the MAC address of the first data transmission device from the first MAC frame of the second frame type.

It should be understood that, in another embodiment of this application, the data transmission apparatuses 90 and 100 may include more or fewer modules, and names of the modules may be changed. For example, in FIG. 9, the first receiving module 903 and the second receiving module 905 may be combined into a first receiving module, and the first parsing module 904 and the second parsing module 906 may be combined into a first parsing module. In other words, the data transmission apparatus 90 may include the first construction module, the first sending module, the first receiving module, the first parsing module, and the first processing module. In FIG. 10, the third receiving module 1001 may be renamed as a second receiving module, the third parsing module 1002, the fourth parsing module 1004, and the fifth parsing module 1009 may be combined into a second parsing module, the second construction module 1005 and the third construction module 1007 may be combined into a second construction module, and the third sending module 1008 may be renamed as a second sending module. In other words, the data transmission apparatus 100 may include the second receiving module, the second parsing module, the second processing module, the second construction module, and the second sending module.

The modules in FIG. 9 and FIG. 10 may correspond to the modules in FIG. 1. For example, the first fast transmission module 104 may correspond to the first construction module 901, the first sending module 902, the first receiving module 903, and the second receiving module 905; the first device parameter synchronizer 103 may correspond to the first parsing module 904 and the second parsing module 906; the panel application managing module 102, the graphics module 105, and the encoding module 106 may correspond to the first processing module 907; the second fast transmission module 112 may correspond to the third receiving module 1001, the third parsing module 1002, the second construction module 1005, the second sending module 1006, the third construction module 1007, and the third sending module 1008; the second device parameter synchronizer 111 may correspond to the fourth parsing module 1004 and the fifth parsing module 1009; and the decoding module 113 may correspond to the second processing module 1003.

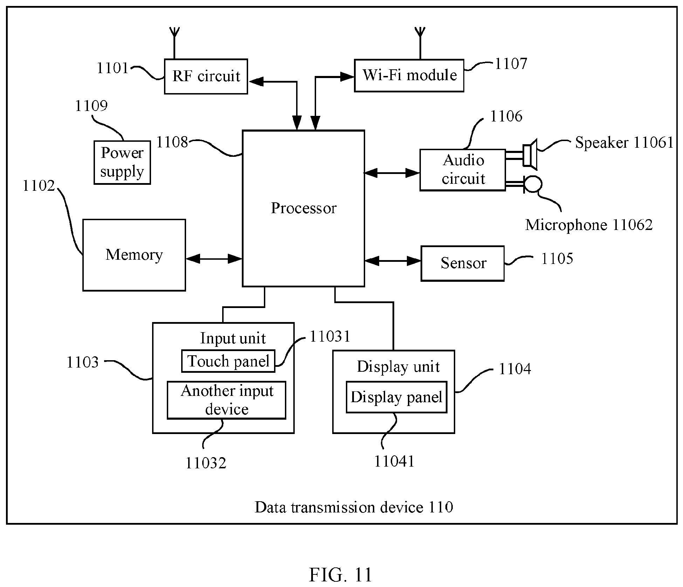

FIG. 11 is a schematic diagram of a structure of a data transmission device (a first data transmission device or a second data transmission device) according to an embodiment of this application. As shown in FIG. 11, the data transmission device 110 may include components such as a radio frequency (Radio Frequency, RF) circuit 1101, a memory 1102, an input unit 1103, a display unit 1104, a sensor 1105, an audio circuit 1106, a Wi-Fi module 1107, a processor 1108, and a power supply 1109. A person skilled in the art may understand that the structure shown in FIG. 8 does not constitute a limitation on the data transmission device, and the data transmission device may include more or fewer components than those shown in the figure, or combine some components, or have different component arrangements.

The RF circuit 1101 may be configured to receive and send signals in an information sending and receiving process or in a call process. Particularly, after receiving downlink information from a base station, the RF circuit 1101 forwards the downlink information to the processor 1108 for processing. In addition, the RF circuit 1101 sends related uplink data to the base station. Generally, the RF circuit 1101 includes but is not limited to an antenna, at least one amplifier, a transceiver, a coupler, a low noise amplifier (Low Noise Amplifier, LNA), a duplexer, and the like.

The memory 1102 may be configured to store a software program and a module. The processor 1108 runs the software program and the module that are stored in the memory 1102, to execute various function applications and data processing of the data transmission device. The memory 1102 may mainly include a program storage area and a data storage area. The program storage area may store an operating system, an application required for at least one function (such as a sound play function and an image play function), and the like. The data storage area may store data created during use of the data transmission device (such as audio data and a phone book), and the like. In addition, the memory 1102 may include a high-speed random access memory, or may include a non-volatile memory such as at least one magnetic disk storage device, a flash memory device, or another volatile solid-state storage device.

The input unit 1103 may be configured to: receive input digit or character information, and generate key signal input related to user settings and function control of the data transmission device. Specifically, the input unit 1103 may include a touch panel 11031 and another input device 11032. The touch panel 11031, also referred to as a touchscreen, may collect a touch operation of a user on or near the touch panel 11031 (for example, an operation of the user on or near the touch panel 11031 by using any suitable object or accessory, for example, a finger or a stylus), and drive a corresponding connection apparatus according to a preset program. Optionally, the touch panel 11031 may include two parts: a touch detection apparatus and a touch controller. The touch detection apparatus detects a touch orientation of the user, detects a signal along with a touch operation, and transfers the signal to the touch controller. The touch controller receives touch information from the touch detection apparatus, converts the touch information to touch point coordinates, sends the touch point coordinates to the processor 1108, and receives and executes a command sent by the processor 1108. In addition, the touch panel 11031 may be implemented by using a plurality of types, such as a resistive type, a capacitive type, an infrared ray type, and a surface acoustic wave type. In addition to the touch panel 11031, the input unit 1103 may further include the another input device 11032. Specifically, the another input device 11032 may include, but is not limited to, one or more of a physical keyboard, a functional key (for example, a volume control key or an on/off key), a trackball, a mouse, and a joystick.

The display unit 1104 may be configured to display information entered by the user, information provided for the user, and various menus of the data transmission device. The display unit 1104 may include a display panel 11041. Optionally, the display panel 11041 may be configured in a form of a liquid crystal display (Liquid Crystal Display, LCD), an organic light-emitting diode (Organic Light-Emitting Diode, OLED), or the like. Further, the touch panel 11031 may cover the display panel 11041. After detecting a touch operation on or near the touch panel 11031, the touch panel 11031 transfers the touch operation to the processor 1108, to determine a type of a touch event. Subsequently, the processor 1108 provides corresponding visual output in the display panel 11041 according to the type of the touch event. Although the touch panel 11031 and the display panel 11041 are used as two separate components to implement input and output functions of the data transmission device in FIG. 8, in some embodiments, the touch panel 11031 and the display panel 11041 may be integrated to implement the input and output functions of the data transmission device.

The data transmission device may further include at least one type of sensor 1105, such as a light sensor, a motion sensor, and another sensor. Specifically, the light sensor may include an ambient light sensor and a proximity sensor. The ambient light sensor may adjust brightness of the display panel 11041 according to intensity of ambient light. The proximity sensor may turn off the display panel 11041 and/or backlight when the data transmission device moves close to an car. As a type of motion sensor, an accelerometer sensor may detect values of acceleration in various directions (there are usually three axes), may detect a value and a direction of gravity when the data transmission device is stationary, and may be used for an application of recognizing a posture of the data transmission device (for example, landscape/portrait mode switching, a related game, or magnetometer posture calibration), a vibration recognition related function (for example, a pedometer or a stroke), and the like. In addition, other sensors may be disposed for the data transmission device, such as a gyroscope, a barometer, a hygrometer, a thermometer, and an infrared sensor. Details are not described herein.

The audio circuit 1106, a speaker 11061, and a microphone 11062 may provide an audio interface between a user and the data transmission device. The audio circuit 1106 can transmit, to the speaker 11061, an electrical signal converted from received audio data, and the speaker 11061 converts the electrical signal to a sound signal for outputting. In addition, the microphone 11062 converts a collected sound signal to an electrical signal, and audio circuit 1106 receives the electrical signal and then converts the electrical signal to audio data. Then the audio data is output to the processor 1108 for processing and then sent to another data transmission device through the RF circuit 1101; or the audio data is output to the memory 1102 for further processing.

Wi-Fi is a short-range wireless transmission technology. The data transmission device 110 may help, by using the Wi-Fi module 1107, the user receive and send emails, browse a web page, access streaming media, and the like, to provide wireless broadband Internet access for the user. Although FIG. 8 shows the Wi-Fi module 1107, it may be understood that the Wi-Fi module 1107 is not a mandatory component of the data transmission device, and may be omitted according to a requirement without changing the essence of the present invention.

The processor 1108 is a control center of the data transmission device, connects to various parts of the entire data transmission device by using various interfaces and lines, and executes various functions and data processing of the data transmission device by running or executing a software program and/or a module stored in the memory 1102 and invoking data stored in the memory 1102, to perform overall monitoring on the data transmission device. Optionally, the processor 1108 may include one or more processing units. Preferably, an application processor and a modem may be integrated into the processor 1108. The application processor mainly processes an operating system, a user interface, an application, and the like. The modem mainly processes wireless communication. It may be understood that the foregoing modem processor may alternatively not be integrated into the processor 1108.

The data transmission device further includes the power supply 1109 (for example, a battery) that supplies power to all the components. Optionally, the power supply may be logically connected to the processor 1108 by using a power management system, to implement functions, such as charging management, discharging management, and power consumption management, by using the power management system.

Although not shown in the figure, the data transmission device may further include a camera, a Bluetooth module, and the like, and details are not described herein.

The data transmission device described in FIG. 10 may be configured to implement some or all of the procedures in the method embodiments described in FIG. 5 to FIG. 8 of this application. For details, refer to related descriptions in the foregoing embodiments described in FIG. 5 to FIG. 8. Details are not described herein again.

An embodiment further provides a computer storage medium. The computer storage medium stores computer instructions. When the computer instructions are run on a data transmission device, the data transmission device is enabled to perform the foregoing related method steps to implement the memory reclamation methods in the foregoing embodiments.

This embodiment further provides a computer program product. When the computer program product runs on a data transmission device, the data transmission device is enabled to perform the foregoing related steps, to implement the memory reclamation methods in the foregoing embodiments.

In addition, an embodiment of this application further provides an apparatus. The apparatus may be specifically a chip, a component, or a module. The apparatus may include a processor and a memory that are connected to each other. The memory is configured to store computer executable instructions. When the apparatus runs, the processor may execute the computer executable instructions stored in the memory, so that the chip performs the memory reclamation methods in the foregoing method embodiments.

The data transmission device, the data transmission apparatus, the computer storage medium, the computer program product, or the chip provided in embodiments is configured to perform the corresponding method provided above. Therefore, for beneficial effects that can be achieved, refer to the beneficial effects of the corresponding method provided above. Details are not described herein again.

The foregoing descriptions about implementations allow a person skilled in the art to understand that, for the purpose of convenient and brief description, division of the foregoing functional modules is taken as an example for illustration. During actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division into the modules or units is merely logical function division, and may be other division in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected according to an actual requirement to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A data transmission method, applied to a first data transmission device, wherein the method comprises:
constructing (501) a first media access control MAC frame, wherein the first MAC frame comprises a frame header part and a data part, the frame header part comprises a protocol type field, the protocol type field of the first MAC frame is a first indication value, the first indication value indicates that the data part of the first MAC frame comprises a data header and data content, the data header comprises a frame type field and a data length field, the frame type field indicates a type of the first MAC frame, and the data length field indicates a length of the data content; and
sending (502) the first MAC frame to a second data transmission device,
wherein the frame type field is a first frame type, and the first frame type indicates that the first MAC frame is used to search for a MAC address of another data transmission device; or
the frame type field is a second frame type, and the second frame type indicates that the first MAC frame is used to advertise a MAC address of the first data transmission device; or
the frame type field is a third frame type, the third frame type indicates that the first MAC frame is used to transmit application data, and the data content comprises the application data.

2. The data transmission method according to claim 1, wherein if the frame type field is the first frame type, the sending the first MAC frame to a second data transmission device comprises:
sending the first MAC frame to the second data transmission device in a MAC broadcast manner.

3. The data transmission method according to claim 2, wherein after the sending the first MAC frame to the second data transmission device in a MAC broadcast manner, the method further comprises:
receiving a second MAC frame sent by the second data transmission device, wherein the second MAC frame is sent to the first data transmission device in a MAC unicast manner after the second data transmission device receives the first MAC frame, a structure of the second MAC frame is the same as that of the first MAC frame, a frame type field of the second MAC frame is the second frame type, data content of the second MAC frame comprises device information of the second data transmission device, and a frame header of the second MAC frame comprises a MAC address of the second data transmission device; and
parsing out the MAC address of the second data transmission device from the second MAC frame.

4. The data transmission method according to claim 1, wherein before the constructing a first MAC frame, the method further comprises:
receiving a third MAC frame sent by the second data transmission device in a MAC broadcast manner, wherein a structure of the third MAC frame is the same as that of the first MAC frame, a frame type field of the third MAC frame is the first frame type, data content of the third MAC frame comprises device information of the second data transmission device, and a frame header of the third MAC frame comprises a MAC address of the second data transmission device; and
parsing out the MAC address of the second data transmission device from the third MAC frame;
the constructing a first MAC frame comprises:
constructing the first MAC frame based on the MAC address of the second data transmission device, wherein a frame type field of the first MAC frame is the second frame type, and a frame header of the first MAC frame comprises the MAC address of the first data transmission device; and
the sending the first MAC frame to a second data transmission device comprises:
sending the first MAC frame to the second data transmission device in a MAC unicast manner.

5. The data transmission method according to any one of claims 1 to 4, wherein the first data transmission device comprises an indoor unit, the second data transmission device comprises a screen-equipped panel, and the indoor unit and the screen-equipped panel form a visual access control system.

6. The data transmission method according to claim 3 or 4, wherein the device information of the second data transmission device comprises screen resolution, a screen size, and decoder information,
preferably wherein the first data transmission device comprises an application corresponding to the second data transmission device, and before the constructing a first MAC frame, the method further comprises:
running the application on the first data transmission device;
generating a graphical interface of the application based on the screen resolution and the screen size; and
encoding the graphical interface based on the decoder information to obtain the application data.

7. The data transmission method according to claim 1, wherein the data header further comprises a packet number field and a segment number field, and the constructing the first MAC frame for the application data comprises:
segmenting the application data to obtain segmented data;
performing forward error correction encoding on the segmented data to obtain a forward error correction code; and
encapsulating the forward error correction code and the segmented data to obtain the first MAC frame.

8. A data transmission method, applied to a second data transmission device, wherein the method comprises:
receiving (502) a first media access control MAC frame sent by a first data transmission device, wherein the first MAC frame comprises a frame header part and a data part, the frame header part comprises a protocol type field, the protocol type field of the first MAC frame is a first indication value, the first indication value indicates that the data part of the first MAC frame comprises a data header and data content, the data header comprises a frame type field and a data length field, the frame type field indicates a type of the first MAC frame, and the data length field indicates a length of the data content,
wherein the frame type field is a first frame type, and the first frame type indicates that the first MAC frame is used to search for a MAC address of another data transmission device; or
the frame type field is a second frame type, and the second frame type indicates that the first MAC frame is used to advertise a MAC address of the first data transmission device; or
the frame type field is a third frame type, the third frame type indicates that the first MAC frame is used to transmit application data, and the data content comprises the application data.

9. The data transmission method according to claim 8, wherein the frame type field is a third frame type, the third frame type indicates that the first MAC frame is used to transmit application data, and the data content comprises the application data; and
the method further comprises:
parsing out the application data from the first MAC frame of the third frame type,
preferably wherein the data header further comprises a packet number field and a segment number field, and the method further comprises:
performing forward error correction decoding on the application data to obtain data after the error correction decoding; and
combining the data after the error correction decoding into a data packet based on the packet number field and the segment number field.

10. The data transmission method according to claim 8, wherein the frame type field is a first frame type, the first frame type indicates that the first MAC frame is used to search for a MAC address of another data transmission device, the first MAC frame is sent to the second data transmission device in a MAC broadcast manner, and a frame header part of the first MAC frame comprises a MAC address of the first data transmission device; and
after the receiving a first MAC frame, the method further comprises:
parsing out the MAC address of the first data transmission device from the first MAC frame of the first frame type;
constructing a second MAC frame, wherein a structure of the second MAC frame is the same as that of the first MAC frame, a frame type field of the second MAC frame is a second frame type, data content of the second MAC frame comprises device information of the second data transmission device, the second frame type indicates that the second MAC frame is used to advertise a MAC address of the second data transmission device, and a frame header of the second MAC frame comprises the MAC address of the second data transmission device; and
sending the second MAC frame to the first data transmission device in a MAC unicast manner.

11. The data transmission method according to claim 8, wherein the frame type field is a second frame type, the second frame type indicates that the first MAC frame is used to advertise a MAC address of the second data transmission device, the first MAC frame is sent to a second data transmission device in a MAC unicast manner, and a frame header of the first MAC frame comprises a MAC address of the first data transmission device; and
before receiving a first MAC frame, the method further comprises:
constructing a third MAC frame, wherein a structure of the third MAC frame is the same as that of the first MAC frame, a frame type field of the third MAC frame is a first frame type, data content of the third MAC frame comprises device information of the second data transmission device, the first frame type indicates that the third MAC frame is used to search for a MAC address of another data transmission device, and a frame header of the third MAC frame comprises a MAC address of the second data transmission device; and
sending the third MAC frame to the first data transmission device in a MAC broadcast manner;
after the receiving a first MAC frame, the method further comprises:
parsing out the MAC address of the first data transmission device from the first MAC frame of the second frame type.

12. The data transmission method according to any one of claims 9 to 11, wherein the first data transmission device comprises an indoor unit, the second data transmission device comprises a screen-equipped panel, and the indoor unit and the screen-equipped panel form a visual access control system.

13. A data transmission apparatus configured to perform the method of any of claims 1 to 7 or any of claims 8 to 12.

14. A computer-readable storage medium, comprising computer instructions, wherein when the computer instructions are run on a computer or a processor, the computer or the processor is enabled to perform the data transmission method according to any one of claims 1 to 7 or claims 8 to 12.

## Patentansprüche

1. Datenübertragungsverfahren, das auf eine erste Datenübertragungsvorrichtung angewandt wird, wobei das Verfahren Folgendes umfasst:
Konstruieren (501) eines ersten Medienzugriffssteuerungsframes, MAC-Frames, wobei der erste MAC-Frame einen Frame-Header-Teil und einen Datenteil umfasst, der Frame-Header-Teil ein Protokollartfeld umfasst, das Protokollartfeld des ersten MAC-Frames ein erster Angabewert ist, der erste Angabewert angibt, dass der Datenteil des ersten MAC-Frames einen Daten-Header und einen Dateninhalt umfasst, der Daten-Header ein Frame-Artfeld und ein Datenlängenfeld umfasst, das Frame-Artfeld eine Art des ersten MAC-Frames angibt und das Datenlängenfeld eine Länge des Dateninhalts angibt; und
Senden (502) des ersten MAC-Frames an eine zweite Datenübertragungsvorrichtung,
wobei das Frame-Artfeld eine erste Frame-Art ist und die erste Frame-Art angibt, dass der erste MAC-Frame dazu verwendet wird, nach einer MAC-Adresse einer anderen Datenübertragungsvorrichtung zu suchen; oder
das Frame-Artfeld eine zweite Frame-Art ist und die zweite Frame-Art angibt, dass der erste MAC-Frame dazu verwendet wird, eine MAC-Adresse der ersten Datenübertragungsvorrichtung bekanntzugeben; oder
das Frame-Artfeld eine dritte Frame-Art ist, die dritte Frame-Art angibt, dass der erste MAC-Frame dazu verwendet wird, Anwendungsdaten zu übertragen, und der Dateninhalt die Anwendungsdaten umfasst.

2. Datenübertragungsverfahren nach Anspruch 1, wobei, falls das Frame-Artfeld die erste Frame-Art ist, das Senden des ersten MAC-Frames an eine zweite Datenübertragungsvorrichtung Folgendes umfasst:
Senden des ersten MAC-Frames an die zweite Datenübertragungsvorrichtung in einer MAC-Rundrufweise.

3. Datenübertragungsverfahren nach Anspruch 2, wobei das Verfahren nach dem Senden des ersten MAC-Frames an die zweite Datenübertragungsvorrichtung in einer MAC-Rundrufweise ferner Folgendes umfasst:
Empfangen eines zweiten MAC-Frames, der durch die zweite Datenübertragungsvorrichtung gesendet wird, wobei der zweite MAC-Frame in einer MAC-Zielrufweise an die erste Datenübertragungsvorrichtung gesendet wird, nachdem die zweite Datenübertragungsvorrichtung den ersten MAC-Frame empfangen hat, eine Struktur des zweiten MAC-Frames die gleiche wie jene des ersten MAC-Frames ist, ein Frame-Artfeld des zweiten MAC-Frames die zweite Frame-Art ist, ein Dateninhalt des zweiten MAC-Frames Vorrichtungsinformationen der zweiten Datenübertragungsvorrichtung umfasst und ein Frame-Header des zweiten MAC-Frames eine MAC-Adresse der zweiten Datenübertragungsvorrichtung umfasst; und
Herausfiltern der MAC-Adresse der zweiten Datenübertragungsvorrichtung aus dem zweiten MAC-Frame.

4. Datenübertragungsverfahren nach Anspruch 1, wobei das Verfahren vor dem Konstruieren eines ersten MAC-Frames ferner Folgendes umfasst:
Empfangen eines dritten MAC-Frames, der durch die zweite Datenübertragungsvorrichtung in einer MAC-Rundrufweise gesendet wird, wobei eine Struktur des dritten MAC-Frames die gleiche wie jene des ersten MAC-Frames ist, ein Frame-Artfeld des dritten MAC-Frames die erste Frame-Art ist, ein Dateninhalt des dritten MAC-Frames Vorrichtungsinformationen der zweiten Datenübertragungsvorrichtung umfasst und ein Frame-Header des dritten MAC-Frames eine MAC-Adresse der zweiten Datenübertragungsvorrichtung umfasst; und
Herausfiltern der MAC-Adresse der zweiten Datenübertragungsvorrichtung aus dem dritten MAC-Frame;
das Konstruieren eines ersten MAC-Frames Folgendes umfasst:
Konstruieren des ersten MAC-Frames basierend auf der MAC-Adresse der zweiten Datenübertragungsvorrichtung, wobei ein Frame-Artfeld des ersten MAC-Frames die zweite Frame-Art ist und ein Frame-Header des ersten MAC-Frames die MAC-Adresse der ersten Datenübertragungsvorrichtung umfasst; und
das Senden des ersten MAC-Frames an eine zweite Datenübertragungsvorrichtung Folgendes umfasst:
Senden des ersten MAC-Frames an die zweite Datenübertragungsvorrichtung in einer MAC-Zielrufweise.

5. Datenübertragungsverfahren nach einem der Ansprüche 1 bis 4, wobei die erste Datenübertragungsvorrichtung eine Inneneinheit umfasst, die zweite Datenübertragungsvorrichtung ein mit einem Bildschirm ausgestattetes Paneel umfasst und die Inneneinheit und das mit einem Bildschirm ausgestattete Paneel ein visuelles Zugriffssteuerungssystem bilden.

6. Datenübertragungsverfahren nach Anspruch 3 oder 4, wobei die Vorrichtungsinformationen der zweiten Datenübertragungsvorrichtung eine Bildschirmauflösung, eine Bildschirmgröße und Decoderinformationen umfassen,
vorzugsweise wobei die erste Datenübertragungsvorrichtung eine Anwendung umfasst, die der zweiten Datenübertragungsvorrichtung entspricht, und das Verfahren vor dem Konstruieren eines ersten MAC-Frames ferner Folgendes umfasst:
Ausführen der Anwendung auf der ersten Datenübertragungsvorrichtung;
Erzeugen einer grafischen Schnittstelle der Anwendung basierend auf der Bildschirmauflösung und der Bildschirmgröße; und
Codieren der grafischen Schnittstelle basierend auf den Decoderinformationen, um die Anwendungsdaten zu erlangen.

7. Datenübertragungsverfahren nach Anspruch 1, wobei der Daten-Header ferner ein Paketnummernfeld und ein Segmentnummernfeld umfasst und das Konstruieren des ersten MAC-Frames für die Anwendungsdaten Folgendes umfasst:
Segmentieren der Anwendungsdaten, um segmentierte Daten zu erlangen;
Durchführen einer Vorwärtsfehlerkorrekturcodierung an den segmentierten Daten, um einen Vorwärtsfehlerkorrekturcode zu erlangen; und
Einkapseln des Vorwärtsfehlerkorrekturcodes und der segmentierten Daten, um den ersten MAC-Frame zu erlangen.

8. Datenübertragungsverfahren, das auf eine zweite Datenübertragungsvorrichtung angewandt wird, wobei das Verfahren Folgendes umfasst:
Empfangen (502) eines ersten Medienzugriffssteuerungsframes, MAC-Frames, der durch eine erste Datenübertragungsvorrichtung gesendet wird, wobei der erste MAC-Frame einen Frame-Header-Teil und einen Datenteil umfasst, der Frame-Header-Teil ein Protokollartfeld umfasst, das Protokollartfeld des ersten MAC-Frames ein erster Angabewert ist, der erste Angabewert angibt, dass der Datenteil des ersten MAC-Frames einen Daten-Header und einen Dateninhalt umfasst, der Daten-Header ein Frame-Artfeld und ein Datenlängenfeld umfasst, das Frame-Artfeld eine Art des ersten MAC-Frames angibt und das Datenlängenfeld eine Länge des Dateninhalts angibt,
wobei das Frame-Artfeld eine erste Frame-Art ist und die erste Frame-Art angibt, dass der erste MAC-Frame dazu verwendet wird, nach einer MAC-Adresse einer anderen Datenübertragungsvorrichtung zu suchen; oder
das Frame-Artfeld eine zweite Frame-Art ist und die zweite Frame-Art angibt, dass der erste MAC-Frame dazu verwendet wird, eine MAC-Adresse der ersten Datenübertragungsvorrichtung bekanntzugeben; oder
das Frame-Artfeld eine dritte Frame-Art ist, die dritte Frame-Art angibt, dass der erste MAC-Frame dazu verwendet wird, Anwendungsdaten zu übertragen, und der Dateninhalt die Anwendungsdaten umfasst.

9. Datenübertragungsverfahren nach Anspruch 8, wobei das Frame-Artfeld eine dritte Frame-Art ist, die dritte Frame-Art angibt, dass der erste MAC-Frame dazu verwendet wird, Anwendungsdaten zu übertragen, und der Dateninhalt die Anwendungsdaten umfasst; und
das Verfahren ferner Folgendes umfasst:
Herausfiltern der Anwendungsdaten aus dem ersten MAC-Frame der dritten Frame-Art,
vorzugsweise wobei der Daten-Header ferner ein Paketnummernfeld und ein Segmentnummernfeld umfasst und das Verfahren ferner Folgendes umfasst:
Durchführen einer Vorwärtsfehlerkorrekturdecodierung an den Anwendungsdaten, um Daten nach der Fehlerkorrekturdecodierung zu erlangen; und
Kombinieren der Daten nach der Fehlerkorrekturdecodierung zu einem Datenpaket basierend auf dem Paketnummernfeld und dem Segmentnummernfeld.

10. Datenübertragungsverfahren nach Anspruch 8, wobei das Frame-Artfeld eine erste Frame-Art ist, die erste Frame-Art angibt, dass der erste MAC-Frame dazu verwendet wird, nach einer MAC-Adresse einer anderen Datenübertragungsvorrichtung zu suchen, der erste MAC-Frame in einer MAC-Rundrufweise an die zweite Datenübertragungsvorrichtung gesendet wird und ein Frame-Header-Teil des ersten MAC-Frames eine MAC-Adresse der ersten Datenübertragungsvorrichtung umfasst; und
das Verfahren nach dem Empfangen eines ersten MAC-Frames ferner Folgendes umfasst:
Herausfiltern der MAC-Adresse der ersten Datenübertragungsvorrichtung aus dem ersten MAC-Frame der ersten Frame-Art;
Konstruieren eines zweiten MAC-Frames, wobei eine Struktur des zweiten MAC-Frames die gleiche wie jene des ersten MAC-Frames ist, ein Frame-Artfeld des zweiten MAC-Frames eine zweite Frame-Art ist, ein Dateninhalt des zweiten MAC-Frames Vorrichtungsinformationen der zweiten Datenübertragungsvorrichtung umfasst, die zweite Frame-Art angibt, dass der zweite MAC-Frame dazu verwendet wird, eine MAC-Adresse der zweiten Datenübertragungsvorrichtung bekanntzugeben, und ein Frame-Header des zweiten MAC-Frames die MAC-Adresse der zweiten Datenübertragungsvorrichtung umfasst; und
Senden des zweiten MAC-Frames an die erste Datenübertragungsvorrichtung in einer MAC-Zielrufweise.

11. Datenübertragungsverfahren nach Anspruch 8, wobei das Frame-Artfeld eine zweite Frame-Art ist, die zweite Frame-Art angibt, dass der erste MAC-Frame dazu verwendet wird, eine MAC-Adresse der zweiten Datenübertragungsvorrichtung bekanntzugeben, der erste MAC-Frame in einer MAC-Zielrufweise an eine zweite Datenübertragungsvorrichtung gesendet wird und ein Frame-Header des ersten MAC-Frames eine MAC-Adresse der ersten Datenübertragungsvorrichtung umfasst; und
das Verfahren vor dem Empfangen eines ersten MAC-Frames ferner Folgendes umfasst:
Konstruieren eines dritten MAC-Frames, wobei eine Struktur des dritten MAC-Frames die gleiche wie jene des ersten MAC-Frames ist, ein Frame-Artfeld des dritten MAC-Frames eine erste Frame-Art ist, ein Dateninhalt des dritten MAC-Frames Vorrichtungsinformationen der zweiten Datenübertragungsvorrichtung umfasst, die erste Frame-Art angibt, dass der dritte MAC-Frame dazu verwendet wird, nach einer MAC-Adresse einer anderen Datenübertragungsvorrichtung zu suchen, und ein Frame-Header des dritten MAC-Frames eine MAC-Adresse der zweiten Datenübertragungsvorrichtung umfasst; und
Senden des dritten MAC-Frames an die erste Datenübertragungsvorrichtung in einer MAC-Rundrufweise;
das Verfahren nach dem Empfangen eines ersten MAC-Frames ferner Folgendes umfasst:
Herausfiltern der MAC-Adresse der ersten Datenübertragungsvorrichtung aus dem ersten MAC-Frame der zweiten Frame-Art.

12. Datenübertragungsverfahren nach einem der Ansprüche 9 bis 11, wobei die erste Datenübertragungsvorrichtung eine Inneneinheit umfasst, die zweite Datenübertragungsvorrichtung ein mit einem Bildschirm ausgestattetes Paneel umfasst und die Inneneinheit und das mit einem Bildschirm ausgestattete Paneel ein visuelles Zugriffssteuerungssystem bilden.

13. Datenübertragungseinrichtung, die dazu konfiguriert ist, das Verfahren nach einem der Ansprüche 1 bis 7 oder einem der Ansprüche 8 bis 12 durchzuführen.

14. Computerlesbares Speichermedium, umfassend Computeranweisungen, wobei, wenn die Computeranweisungen auf einem Computer oder einem Prozessor ausgeführt werden, es dem Computer oder dem Prozessor ermöglicht wird, das Datenübertragungsverfahren nach einem der Ansprüche 1 bis 7 oder der Ansprüche 8 bis 12 durchzuführen.

## Revendications

1. Procédé de transmission de données, appliqué à un premier dispositif de transmission de données, dans lequel le procédé comprend :
la construction (501) d'une première trame de contrôle d'accès au support, MAC, dans lequel la trame MAC comprend une partie d'en-tête de trame et une partie de données, la partie d'en-tête de trame comprend un champ de type de protocole, le champ de type de protocole de la première trame MAC est une première valeur d'indication, la première valeur d'indication indique que la partie de données de la première trame MAC comprend un en-tête de données et un contenu de données, l'en-tête de données comprend un champ de type de trame et un champ de longueur de données, le champ de type de trame indique le type de la première trame MAC, et le champ de longueur de données indique la longueur du contenu de données ; et
l'envoi (502) de la première trame MAC à un second dispositif de transmission de données,
dans lequel le champ de type de trame est un premier type de trame, et le premier type de trame indique que la première trame MAC est utilisée pour rechercher l'adresse MAC d'un autre dispositif de transmission de données ; ou
le champ de type de trame est un deuxième type de trame, et le deuxième type de trame indique que la première trame MAC est utilisée pour annoncer une adresse MAC du premier dispositif de transmission de données ; ou
le champ de type de trame est un troisième type de trame, le troisième type de trame indique que la première trame MAC est utilisée pour transmettre des données d'application, et que le contenu des données comprend les données d'application.

2. Procédé de transmission de données selon la revendication 1, dans lequel, si le champ de type de trame est le premier type de trame, l'envoi de la première trame MAC à un second dispositif de transmission de données comprend :
l'envoi de la première trame MAC au second dispositif de transmission de données en mode de diffusion MAC.

3. Procédé de transmission de données selon la revendication 2, dans lequel, après l'envoi de la première trame MAC au second dispositif de transmission de données en mode de diffusion MAC, le procédé comprend également :
la réception d'une deuxième trame MAC envoyée par le second dispositif de transmission de données, dans lequel la deuxième trame MAC est envoyée au premier dispositif de transmission de données en mode de monodiffusion MAC après réception de la première trame MAC par le second dispositif de transmission de données, la structure de la deuxième trame MAC est identique à celle de la première trame MAC, un champ de type de trame de la deuxième trame MAC correspond au deuxième type de trame, le contenu de données de la deuxième trame MAC comprend les informations de dispositif du second dispositif de transmission de données et un en-tête de trame de la deuxième trame MAC comprend l'adresse MAC du second dispositif de transmission de données ; et
l'extraction de l'adresse MAC du second dispositif de transmission de données à partir de la deuxième trame MAC.

4. Procédé de transmission de données selon la revendication 1, dans lequel, avant la construction d'une première trame MAC, le procédé comprend également :
la réception d'une troisième trame MAC envoyée par le second dispositif de transmission de données en mode de diffusion MAC, dans lequel la structure de la troisième trame MAC est identique à celle de la première trame MAC, un champ de type de trame de la troisième trame MAC est le premier type de trame, le contenu de données de la troisième trame MAC comprend les informations de dispositif du second dispositif de transmission de données, et un en-tête de trame de la troisième trame MAC comprend une adresse MAC du second dispositif de transmission de données ; et
l'extraction de l'adresse MAC du second dispositif de transmission de données à partir de la troisième trame MAC ;
la construction d'une première trame MAC comprend :
la construction de la première trame MAC sur la base de l'adresse MAC du second dispositif de transmission de données, dans lequel un champ de type de trame de la première trame MAC correspond au deuxième type de trame, et un en-tête de trame de la première trame MAC comprend l'adresse MAC du premier dispositif de transmission de données ; et
l'envoi de la première trame MAC à un second dispositif de transmission de données comprend :
l'envoi de la première trame MAC au second dispositif de transmission de données en mode de monodiffusion MAC.

5. Procédé de transmission de données selon l'une quelconque des revendications 1 à 4, dans lequel le premier dispositif de transmission de données comprend une unité intérieure, le second dispositif de transmission de données comprend un panneau équipé d'un écran, et l'unité intérieure et le panneau équipé d'un écran forment un système de commande d'accès visuel.

6. Procédé de transmission de données selon la revendication 3 ou 4, dans lequel les informations de dispositif du second dispositif de transmission de données comprennent la résolution d'écran, la taille de l'écran et les informations du décodeur, de préférence dans lequel le premier dispositif de transmission de données comprend une application correspondant au second dispositif de transmission de données, et avant la construction d'une première trame MAC, le procédé comprend également :
l'exécution de l'application sur le premier dispositif de transmission de données ;
la génération d'une interface graphique de l'application sur la base de la résolution et de la taille de l'écran ; et
l'encodage de l'interface graphique sur la base des informations du décodeur pour obtenir les données de l'application.

7. Procédé de transmission de données selon la revendication 1, dans lequel l'en-tête de données comprend également un champ de numéro de paquet et un champ de numéro de segment, et la construction de la première trame MAC pour les données d'application comprend :
la segmentation des données de l'application pour obtenir des données segmentées ;
la réalisation d'un codage de correction d'erreurs sans voie de retour sur les données segmentées afin d'obtenir un code de correction d'erreurs sans voie de retour ; et
l'encapsulation du code de correction d'erreurs sans voie de retour et les données segmentées pour obtenir la première trame MAC.

8. Procédé de transmission de données, appliqué à un second dispositif de données de transmission, dans lequel le procédé comprend :
la réception (502) d'une première trame de contrôle d'accès au support, MAC, envoyée par un premier dispositif de transmission de données, dans lequel la trame MAC comprend une partie d'en-tête de trame et une partie de données, la partie d'en-tête de trame comprend un champ de type de protocole, le champ de type de protocole de la première trame MAC est une première valeur d'indication, la première valeur d'indication indique que la partie de données de la première trame MAC comprend un en-tête de données et un contenu de données, l'en-tête de données comprend un champ de type de trame et un champ de longueur de données, le champ de type de trame indique le type de la première trame MAC, et le champ de longueur de données indique la longueur du contenu de données,
dans lequel le champ de type de trame est un premier type de trame, et le premier type de trame indique que la première trame MAC est utilisée pour rechercher l'adresse MAC d'un autre dispositif de transmission de données ; ou
le champ de type de trame est un deuxième type de trame, et le deuxième type de trame indique que la première trame MAC est utilisée pour annoncer une adresse MAC du premier dispositif de transmission de données ; ou
le champ de type de trame est un troisième type de trame, le troisième type de trame indique que la première trame MAC est utilisée pour transmettre des données d'application, et que le contenu des données comprend les données d'application.

9. Procédé de transmission de données selon la revendication 8, dans lequel le champ de type de trame est un troisième type de trame, le troisième type de trame indique que la première trame MAC est utilisée pour transmettre des données d'application, et que le contenu des données comprend les données d'application ; et
le procédé comprend également :
l'extraction des données d'application à partir de la première trame MAC du troisième type de trame,
de préférence dans lequel l'en-tête de données comprend également un champ de numéro de paquet et un champ de numéro de segment, et le procédé comprend également :
la réalisation d'un décodage de correction d'erreurs sans voie de retour sur les données d'application afin d'obtenir les données après le décodage de correction d'erreurs ; et
la combinaison des données après le décodage de correction d'erreurs en un paquet de données sur la base du champ de numéro de paquet et le champ de numéro de segment.

10. Procédé de transmission de données selon la revendication 8, dans lequel le champ de type de trame est un premier type de trame, le premier type de trame indique que la première trame MAC est utilisée pour rechercher l'adresse MAC d'un autre dispositif de transmission de données, la première trame MAC est envoyée au second dispositif de transmission de données en mode de diffusion MAC, et une partie d'en-tête de trame de la première trame MAC comprend l'adresse MAC du premier dispositif de transmission de données ; et
après la réception d'une première trame MAC, le procédé comprend également :
l'extraction de l'adresse MAC du premier dispositif de transmission de données à partir de la première trame MAC du premier type de trame ;
la construction d'une deuxième trame MAC, dans lequel la structure de la deuxième trame MAC est identique à celle de la première trame MAC, un champ de type de trame de la deuxième trame MAC est un deuxième type de trame, le contenu de données de la deuxième trame MAC comprend les informations du second dispositif de transmission de données, le deuxième type de trame indique que la deuxième trame MAC est utilisée pour annoncer l'adresse MAC du second dispositif de transmission de données, et un en-tête de trame de la deuxième trame MAC comprend l'adresse MAC du second dispositif de transmission de données ; et
l'envoi de la deuxième trame MAC au premier dispositif de transmission de données en mode de monodiffusion MAC.

11. Procédé de transmission de données selon la revendication 8, dans lequel le champ de type de trame est un deuxième type de trame, le deuxième type de trame indique que la première trame MAC est utilisée pour annoncer l'adresse MAC du second dispositif de transmission de données, la première trame MAC est envoyée à un second dispositif de transmission de données en mode de monodiffusion MAC, et un en-tête de trame de la première trame MAC comprend l'adresse MAC du premier dispositif de transmission de données ; et avant la réception d'une première trame MAC, le procédé comprend également :
la construction d'une troisième trame MAC, dans lequel la structure de la troisième trame MAC est identique à celle de la première trame MAC, un champ de type de trame de la troisième trame MAC est un premier type de trame, le contenu de données de la troisième trame MAC comprend les informations de dispositif du second dispositif de transmission de données, le premier type de trame indique que la troisième trame MAC est utilisée pour rechercher l'adresse MAC d'un autre dispositif de transmission de données, et un en-tête de trame de la troisième trame MAC comprend l'adresse MAC du second dispositif de transmission de données ; et
l'envoi de la troisième trame MAC au premier dispositif de transmission de données en mode de diffusion MAC ;
après la réception d'une première trame MAC, le procédé comprend également :
l'extraction de l'adresse MAC du premier dispositif de transmission de données à partir de la première trame MAC du second type de trame.

12. Procédé de transmission de données selon l'une quelconque des revendications 9 à 11, dans lequel le premier dispositif de transmission de données comprend une unité intérieure, le second dispositif de transmission de données comprend un panneau équipé d'un écran, et l'unité intérieure et le panneau équipé d'un écran forment un système de commande d'accès visuel.

13. Appareil de transmission de données, configuré pour réaliser le procédé selon l'une quelconque des revendications 1 à 7 ou l'une quelconque des revendications 8 à 12.

14. Support de stockage lisible par ordinateur, comprenant des instructions informatiques, dans lequel, lorsque les instructions informatiques sont exécutées sur un ordinateur ou sur un processeur, l'ordinateur ou le processeur est activé pour réaliser le procédé de transmission de données selon l'une quelconque des revendications 1 à 7 ou des revendications 8 à 12.
